# EUROPEAN PATENT APPLICATION

(11) **EP 4 294 085 A1**
(43) Date of publication of application: **20.12.2023**
(21) Application number: 22767323.3
(22) Date of filing: 25.01.2022
(51) Int. Cl.: H04W 48/16, H04W 48/02, H04W 60/00, H04W 88/06

(54) **ELECTRONIC DEVICE COMPRISING PLURALITY OF SUBSCRIBER IDENTITY MODULES, AND OPERATING METHOD THEREFOR**

(30) Priority: 11.03.2021 KR 20210031976
(71) Applicant: Samsung Electronics Co., Ltd., Suwon-si, Gyeonggi-do 16677 (KR)
(72) Inventor: JUNG, Dongsuk, Suwon-si Gyeonggi-do 16677 (KR); YOON, Sukkyung, Suwon-si Gyeonggi-do 16677 (KR); KIM, Huiyeon, Suwon-si Gyeonggi-do 16677 (KR); SHIN, Donghyeok, Suwon-si Gyeonggi-do 16677 (KR)
(74) Representative: Nederlandsch Octrooibureau
(86) International application number: PCT/KR2022/001303
(87) International publication number: WO 2022/191426

(57) **Abstract**

Various embodiments of the present invention relate to an apparatus and method for information sharing of a plurality of subscriber identity modules in an electronic device. The electronic device comprises a first subscriber identity module, a second subscriber identity module, a wireless communication circuit and a processor operatively connected to the first subscriber identity module, the second subscriber identity module, and the wireless communication circuit, wherein, if the electronic device is registered in a first network through the wireless communication circuit, on the basis of first subscriber identity information and/or first network configuration information of the first subscriber identity module, the processor may update, on the basis of first network configuration information, second network configuration information stored in the second subscriber identity module and perform, on the basis of the updated second network configuration information, a network search corresponding to the second subscriber identity module. Other embodiments are also possible.

## Description

### [Technical Field]

Various embodiments of the disclosure relate to an apparatus and method for sharing information on a plurality of subscriber identity modules (SIMs) in an electronic device.

### [Background Art]

An electronic device may include a subscriber identity module (SIM) managing personal information related to various functions such as user authentication, billing, and security.

An electronic device may perform wireless communication, based on subscriber identity information stored in a subscriber identity module. When an electronic device includes a plurality of subscriber identity modules, the electronic device may perform wireless communication, based on subscriber identity information stored in each subscriber identity module.

### [Disclosure of Invention]

### [Technical Problem]

When an electronic device includes a plurality of subscriber identity modules, the electronic device may perform wireless communication independently, based on each subscriber identity module. For example, when the electronic device includes two subscriber identity modules, the electronic device may perform a network search for a first subscriber identity module. The electronic device may perform a registration process with the searched network through a network search, based on first subscriber identity information stored in the first subscriber identity module. The electronic device may perform a network search for the second subscriber identity module separately from the first subscriber identity module. The electronic device may perform a registration process with the searched network through a network search, based on second subscriber identity information stored in a second subscriber identity module.

Even when an electronic device includes a plurality of subscriber identity modules for a same communication business operator, the electronic device may perform wireless communication independently, based on each subscriber identity module. For example, when the electronic device is able to make a registration only to a first network, based on the first subscriber identity module at the current location of the electronic device, the electronic device may be registered to only the first network, based on the second subscriber identity module of the same communication business operator as the first subscriber identity module. However, because the electronic device does not consider the network configuration information of the first subscriber identity module, the electronic device may first perform a registration process with a second network different from the first network, based on the second subscriber identity information of the second subscriber identity module. In this case, network registration of the electronic device using the second subscriber identity module may be delayed. In addition, the electronic device may have a limited communication function based on a reject cause provided from the second network.

Various embodiments of the disclosure disclose an apparatus and method for sharing information on a plurality of subscriber identity modules (SIMs) in an electronic device.

### [Solution to Problem]

According to various embodiments, an electronic device may include a first subscriber identity module, a second subscriber identity module, a wireless communication circuit, and a processor operatively connected to the first subscriber identity module, the second subscriber identity module, and the wireless communication circuit, and the processor may make a registration to a first network through the wireless communication circuit, based on first subscriber identity information and/or first network configuration information of the first subscriber identity module, identify the first network configuration information, based on the registration to the first network, and perform a network search corresponding to the second subscriber identity module, based on the identified first network configuration information.

According to various embodiments, an operation method of an electronic device including a first subscriber identity module and a second subscriber identity module may include registering to a first network, based on first subscriber identity information and/or first network configuration information of the first subscriber identity module, identifying the first network configuration information, based on the registration to the first network, and performing a network search corresponding to the second subscriber identity module, based on the identified first network configuration information.

### [Advantageous Effects of Invention]

According to various embodiments of the disclosure, a network registration process for the second subscriber identity module in an electronic device may be improved and unnecessary network search may be reduced by performing a network search for the second subscriber identity module with reference to the first network configuration information stored in the first subscriber identity module.

### [Brief Description of Drawings]

FIG. 1 is a block diagram of an electronic device in a network environment, according to various embodiments.
FIG. 2 is a block diagram of an electronic device for supporting legacy network communication and 5G network communication, according to various embodiments.
FIG. 3 is a diagram illustrating a protocol stack structure of a network 100 of 4G communication and/or 5G communication, according to various embodiments.
FIG. 4 is a block diagram of an electronic device supporting a plurality of subscriber identity modules, according to various embodiments.
FIG. 5 is a flowchart for sharing information on subscriber identity modules in an electronic device according to various embodiments.
FIG. 6 is a flowchart for updating information on a first subscriber identity module in an electronic device according to various embodiments.
FIG. 7 is a flowchart for updating PLMN information of a second subscriber identity module, based on PLMN information of a first subscriber identity module in an electronic device according to various embodiments.
FIG. 8 is an example for sharing PLMN information between subscriber identity modules in an electronic device according to various embodiments.
FIG. 9 is another example for sharing PLMN information between subscriber identity modules in an electronic device according to various embodiments.
FIG. 10 is an example of a flowchart for updating a preferred PLMN list of a second subscriber identity module, based on a preferred PLMN list of a first subscriber identity module in an electronic device according to various embodiments.
FIG. 11 is another example of a flowchart for updating a preferred PLMN list of a second subscriber identity module, based on a preferred PLMN list of a first subscriber identity module in an electronic device according to various embodiments.
FIG. 12 is an example of performing a network search for a second subscriber identity module by referring to a preferred PLMN list of a first subscriber identity module in an electronic device according to various embodiments.
FIG. 13 is another example of performing a network search for a second subscriber identity module by referring to a preferred PLMN list of a first subscriber identity module in an electronic device according to various embodiments.
FIG. 14 is a flowchart for updating a network search period for a second subscriber identity module by referring to a preferred PLMN list of a first subscriber identity module in an electronic device according to various embodiments.
FIG. 15 is an example for updating a network search period for a second subscriber identity module by referring to a preferred PLMN list of a first subscriber identity module in an electronic device according to various embodiments.
FIG. 16 is a flowchart for updating a forbidden PLMN list of a second subscriber identity module, based on a forbidden PLMN list of a first subscriber identity module in an electronic device according to various embodiments.
FIG. 17 is an example of performing a network search for a second subscriber identity module by referring to a forbidden PLMN list of a first subscriber identity module in an electronic device according to various embodiments.

### [Mode for the Invention]

Hereinafter, various embodiments will be described in detail with reference to the accompanying drawings.

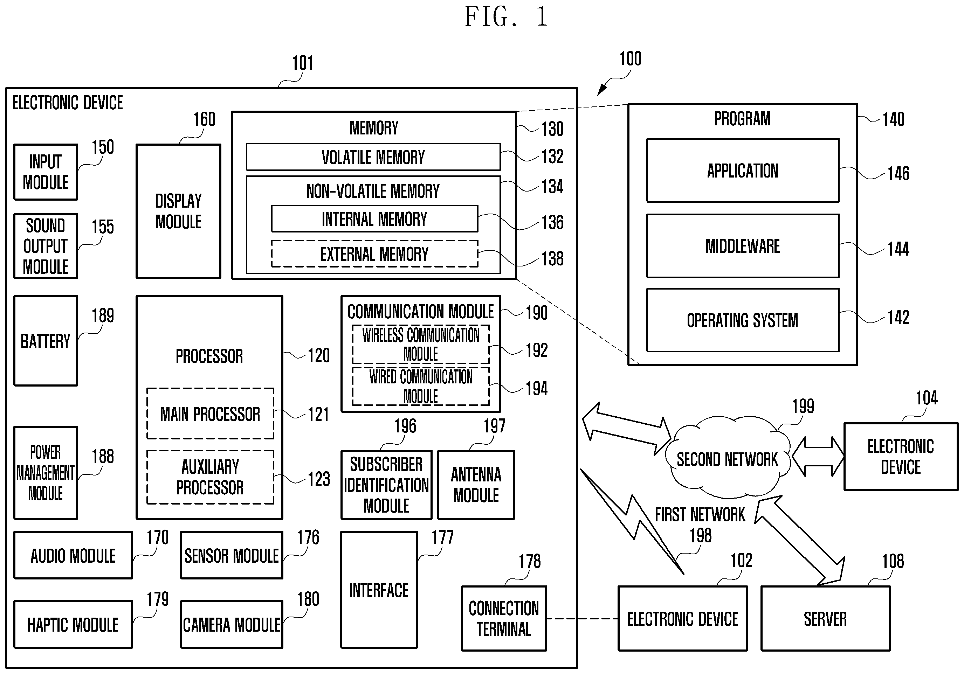

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

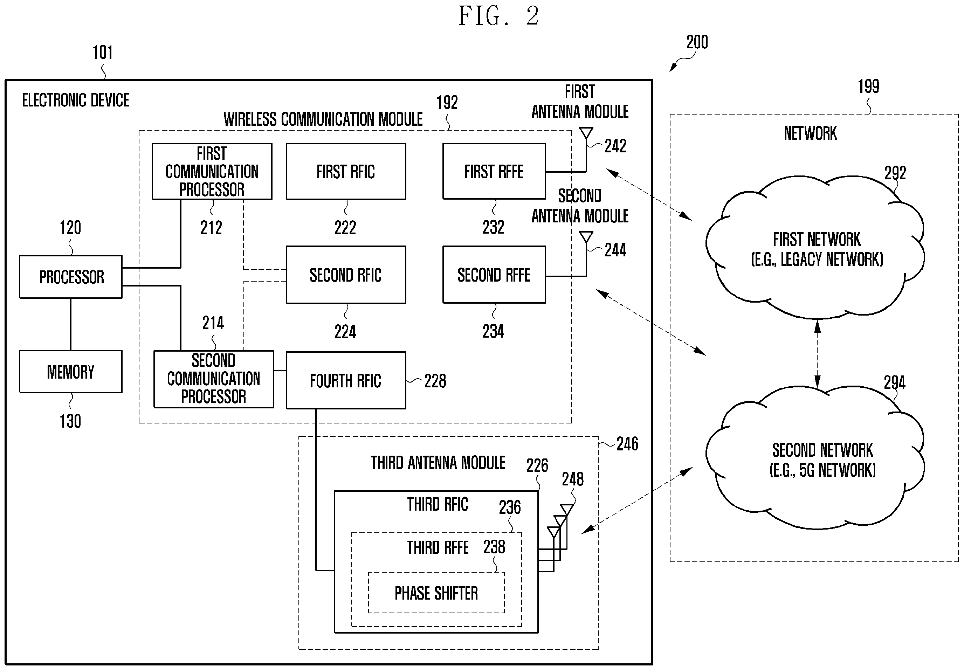

FIG. 2 is a block diagram 200 illustrating an example electronic device 101 supporting legacy network communication and 5G network communication according to various embodiments.

Referring to FIG. 2, according to various embodiments, the electronic device 101 may include a first communication processor (e.g., including processing circuitry) 212, a second communication processor (e.g., including processing circuitry) 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may include the processor 120 and the memory 130. The network 199 may include a first network 292 and a second network 294. According to an embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be at least a part of the wireless communication module 192. According to an embodiment, the fourth RFIC 228 may be omitted, or may be included as a part of the third RFIC 226.

The first communication processor 212 may establish a communication channel of a band to be used for wireless communication with the first network 292, and may support legacy network communication via the established communication channel. According to an embodiment, the first network may be a legacy network including second generation (2G), third generation (3G), fourth generation (4G), or long-term evolution (LTE) network. The second communication processor 214 may establish a communication channel corresponding to a designated band (e.g., approximately 6 GHz to 60 GHz) among bands to be used for wireless communication with the second network 294, and may support 5G network communication via the established communication channel. According to an embodiment, the second network 294 may be a 5G network (e.g., new radio (NR)) defined in 3GPP. In addition, according to an embodiment, the first communication processor 212 or the second communication processor 214 may establish a communication channel corresponding to another designated band (e.g., approximately 6 GHz or less) among bands to be used for wireless communication with the second network 294, and may support 5G network communication via the established communication channel. According to an embodiment, the first communication processor 212 and the second communication processor 214 may be implemented in a single chip or a single package. According to an embodiment, the first communication processor 212 or the second communication processor 214 may be implemented in a single chip or a single package, together with the processor 120, the sub-processor 123, or the communication module 190.

According to an embodiment, the first communication processor 212 may perform data transmission or reception with the second communication processor 214. For example, data which has been classified to be transmitted via the second network 294 may be changed to be transmitted via the first network 292.

In this instance, the first communication processor 212 may receive transmission data from the second communication processor 214. For example, the first communication processor 212 may perform data transmission or reception with the second communication processor 214 via an inter-processor interface. The inter-processor interface may be implemented as, for example, a universal asynchronous receiver/transmitter (UART) (e.g., a high speed-UART (HS-UART)) or a peripheral component interconnect bus express (PCIe), but the type of interface is not limited thereto. For example, the first communication processor 212 and the second communication processor 214 may exchange control information and packet data information using, for example, a shared memory. For example, the first communication processor 212 may perform transmission or reception of various types of information such as sensing information, information associated with an output strength, and resource block (RB) allocation information, with the second communication processor 214.

Depending on implementation, the first communication processor 212 may not be directly connected to the second communication processor 214. In this instance, the first communication processor 212 may perform data transmission or reception with the second communication processor 214, via the processor 120 (e.g., an application processor). For example, the first communication processor 212 and the second communication processor 214 may perform data transmission or reception via the processor 120 (e.g., an application processor) and a HS-UART interface or a PCIe interface, but the type of interface is not limited. For example, the first communication processor 212 and the second communication processor 214 may exchange control information and packet data information using the processor 120 (e.g., an application processor) and a shared memory. According to an embodiment, the first communication processor 212 and the second communication processor 214 may be implemented in a single chip or a single package. According to various embodiments, the first communication processor 212 or the second communication processor 214 may be implemented in a single chip or a single package, together with the processor 120, the sub-processor 123, or the communication module 190.

In the case of transmission, the first RFIC 222 may convert a baseband signal generated by the first communication processor 212 into a radio frequency (RF) signal in the range of approximately 700 MHz to 3 GHz, which is used in the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal into a baseband signal so that the baseband signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) in an Sub6 band (e.g., approximately 6 GHz or less) used in the second network 294 (e.g., a 5G network). In the case of reception, a 5G Sub6 RF signal may be obtained from the second network 294 (e.g., a 5G network) via an antenna (e.g., the second antenna module 244), and may be preprocessed by an RFFE (e.g., the second RFFE 234). The second RFIC 224 may convert the preprocessed 5G Sub6 RF signal into a baseband signal so that the signal may be processed by a corresponding communication processor among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6 GHz to 60 GHz) to be used in the second network 294 (e.g., a 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal into a baseband signal so that the signal is processed by the second communication processor 214. According to an embodiment, the third RFFE 236 may be implemented as a part of the third RFIC 226.

According to an embodiment, the electronic device 101 may include the fourth RFIC 228, separately from or, as a part of, the third RFIC 226. In this instance, the fourth RFIC 228 may convert a baseband signal produced by the second communication processor 214 into an RF signal (hereinafter, an IF signal) in an intermediate frequency band (e.g., approximately 9 GHz to 11 GHz), and may transfer the IF signal to the third RFIC 226. The third RFIC 226 may convert the IF signal into a 5G Above6 RF signal. In the case of reception, a 5G Above6 RF signal may be received from the second network 294 (e.g., a 5G network) via an antenna (e.g., the antenna 248), and may be converted into an IF signal by the third RFIC 226. The fourth RFIC 228 may convert the IF signal into a baseband signal so that the second communication processor 214 is capable of processing the baseband signal.

According to an embodiment, the first RFIC 222 and the second RFIC 224 may be implemented as at least a part of a single chip or a single package. According to an embodiment, the first RFFE 232 and the second RFFE 234 may be implemented as at least a part of a single chip or single package. According to an embodiment, at least one of the first antenna module 242 or the second antenna module 244 may be omitted or may be combined with another antenna module, to process RF signals of a plurality of corresponding bands.

According to an embodiment, the third RFIC 226 and the antenna 248 may be disposed in the same substrate, and may form a third antenna module 246. For example, the wireless communication module 192 or the processor 120 may be disposed in a first substrate (e.g., a main PCB). In this instance, the third RFIC 226 is disposed in a part (e.g., a lower part) of a second substrate (e.g., a sub PCB) different from the first substrate, and the antenna 248 is disposed in another part (e.g., an upper part), so that the third antenna module 246 may be formed. By disposing the third RFIC 226 and the antenna 248 in the same substrate, the length of a transmission line therebetween may be reduced. For example, this may reduce a loss (e.g., a diminution) of a high-frequency band signal (e.g., approximately 6 GHz to 60 GHz) used for 5G network communication, the loss being caused by a transmission line. Accordingly, the electronic device 101 may improve the quality or speed of communication with the second network 294 (e.g., a 5G network).

According to an embodiment, the antenna 248 may be implemented as an antenna array including a plurality of antenna elements which may be used for beamforming. In this instance, the third RFIC 226, for example, may include a plurality of phase shifters 238 corresponding to a plurality of antenna elements, as a part of the third RFFE 236. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of a 5G Above6 RF signal received from the outside via a corresponding antenna element into the same or substantially the same phase. This may enable transmission or reception via beamforming between the electronic device 101 and the outside.

The second network 294 (e.g., a 5G network) may operate independently (e.g., Standalone (SA)) from the first network 292 (e.g., a legacy network), or may operate by being connected thereto (e.g., Non-Standalone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access the access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., new radio (NR) protocol information) for communication with the 5G network may be stored in the memory 130, and may be accessed by another component (e.g., the processor 120, the first communication processor 212, or the second communication processor 214).

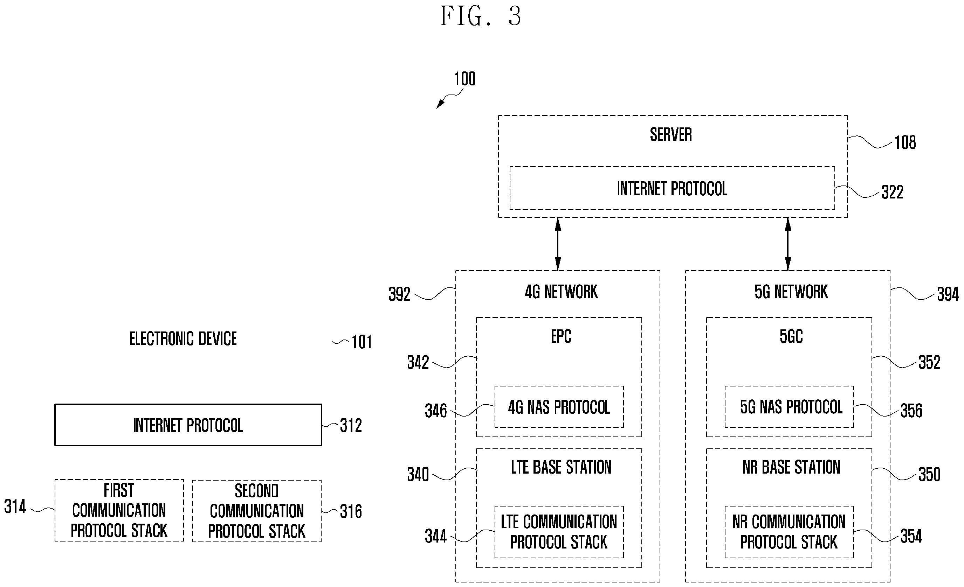

FIG. 3 is a diagram illustrating a protocol stack structure of a network 100 of 4G communication and/or 5G communication, according to various embodiments.

According to various embodiments referring to FIG. 3, the network 100 may include an electronic device 101, a 4G network 392, a 5G network 394 and a server 108.

According to various embodiments, the electronic device 101 may include an Internet protocol 312, a first communication protocol stack 314, and a second communication protocol stack 316. For example, the electronic device 101 may communicate with the server 108 through the 4G network 392 and/or the 5G network 394. According to an embodiment, the electronic device 101 may perform Internet communication related to the server 108 by using the Internet protocol 312 (e.g., a transmission control protocol (TCP), a user datagram protocol (UDP), or an Internet protocol (IP)). For example, the Internet protocol 312 may be executed in a main processor (e.g., the main processor 121 of FIG. 1) included in the electronic device 101.

According to various embodiments, the electronic device 101 may include a plurality of subscriber identity modules (e.g., a first subscriber identity module and a second subscriber identity module). According to an embodiment, the electronic device 101 may communicate with the 4G network 392 and/or the 5G network 394, based on subscriber identity information (e.g., international mobile subscriber identity (IMSI)) stored in each of the plurality of subscriber identity modules (e.g., the first subscriber identity module and the second subscriber identity module).

According to various embodiments, the electronic device 101 may perform wireless communication for the first subscriber identity module by using the first communication protocol stack 314. According to an embodiment, the first communication protocol stack 314 may include a first sub-protocol stack and a second sub-protocol stack. For example, the first sub-protocol stack may include various protocols for wireless communication with the 4G network 392. For example, the second sub-protocol stack may include various protocols for wireless communication with the 5G network 394. According to an embodiment, when performing communication by using the first subscriber identity module, the electronic device 101 may perform wireless communication with the 4G network 392 and/or the 5G network 394 by using the first communication protocol stack 314. For example, the electronic device 101 may perform wireless communication with the 4G network 392 by using the first sub-protocol stack of the first communication protocol stack 314, or perform wireless communication with the 5G network 394 by using the second sub-protocol stack of the first communication protocol stack 314.

According to various embodiments, the electronic device 101 may perform wireless communication for the second subscriber identity module by using the second communication protocol stack 316. According to an embodiment, the second communication protocol stack 316 may include a third sub-protocol stack and a fourth sub-protocol stack. For example, the third sub-protocol stack may include various protocols for wireless communication with the 4G network 392. For example, the fourth sub-protocol stack may include various protocols for wireless communication with the 5G network 394. According to an embodiment, when performing communication by using the second subscriber identity module, the electronic device 101 may perform wireless communication with the 4G network 392 and/or the 5G network 394 by using the second communication protocol stack 316. For example, the electronic device 101 may perform wireless communication with the 4G network 392 by using the third sub-protocol stack of the second communication protocol stack 316, or perform wireless communication with the 5G network 394 by using the fourth sub-protocol stack of the second communication protocol stack 316.

According to various embodiments, the first communication protocol stack 314 and the second communication protocol stack 316 may be executed in one or more communication processors (e.g., the wireless communication module 192 of FIG. 1) included in the electronic device 101.

According to various embodiments, the server 108 may include an Internet Protocol 322. The server 108 may transmit and receive data related to the Internet protocol 322 to and from the electronic device 101 through the 4G network 392 and/or the 5G network 394. According to an embodiment, the server 108 may include a cloud computing server that exists outside of the 4G network 392 or the 5G network 394. According to another embodiment, the server 108 may include an edge computing server (or a mobile edge computing (MEC) server) located inside at least one of the 4G network 392 or the 5G network 394.

According to various embodiments, the 4G network 392 may include a long-term evolution (LTE) base station 340 and an evolved packed core (EPC) 342. The LTE base station 340 may include an LTE communication protocol stack 344. The EPC 342 may include a 4G non-access stratum (NAS) protocol 346. The 4G network 392 may perform LTE wireless communication with the electronic device 101 by using the LTE communication protocol stack 344 and the 4G NAS protocol 346.

According to various embodiments, the 5G network 394 may include a new radio (NR) base station 350 and a 5th generation core (5GC) 352. The NR base station 350 may include an NR communication protocol stack 354. The 5GC 352 may include a 5G NAS protocol 356. The 5G network 394 may perform NR wireless communication with the electronic device 101 by using the NR communication protocol stack 354 and the 5G NAS protocol 356.

According to an embodiment, the first communication protocol stack 314, the second communication protocol stack 316, the LTE communication protocol stack 344, and the NR communication protocol stack 354 may include a control plane protocol for transmitting and receiving a control message and a user plane protocol for transmitting and receiving user data. For example, the control message may include a message related to at least one of security control, bearer setup, authentication, registration, or mobility management. For example, the user data may include data excluding control messages.

According to an embodiment, the control plane protocol and the user plane protocol may include physical (PHY), medium access control (MAC), radio link control (RLC), or packet data convergence protocol (PDCP) layers. For example, the PHY layer may channel-code and modulate data received from a higher layer (e.g., MAC layer) and transmit the data through a radio channel, demodulate and decode data received through the radio channel, and transmit the data to the higher layer. The PHY layer included in the first communication protocol stack 314 (e.g., the second sub-protocol stack), the second communication protocol stack 316 (e.g., the fourth sub-protocol stack), and the NR communication protocol stack 354 may further perform an operation related to beam forming. For example, the MAC layer may logically/physically map data to a radio channel to be transmitted/received, and perform hybrid automatic repeat request (HARQ) for error correction. For example, the RLC layer may perform concatenation, segmentation, or reassembly of data, and order check, rearrangement, or redundancy check of data. For example, the PDCP layer may perform operations related to ciphering and data integrity of control data and user data. The first communication protocol stack 314 (e.g., the second sub-protocol stack), the second communication protocol stack 316 (e.g., the fourth sub-protocol stack), and the NR communication protocol stack 354 may further include a service data adaptation protocol (SDAP). For example, the SDAP may manage radio bearer assignment based on quality of service (QoS) of user data.

According to various embodiments, the control plane protocol may include a radio resource control (RRC) layer and a non-access stratum (NAS) layer. For example, the RRC layer may process radio bearer configuration, paging, or control data related to mobility management. For example, the NAS may process control messages related to authentication, registration, and mobility management.

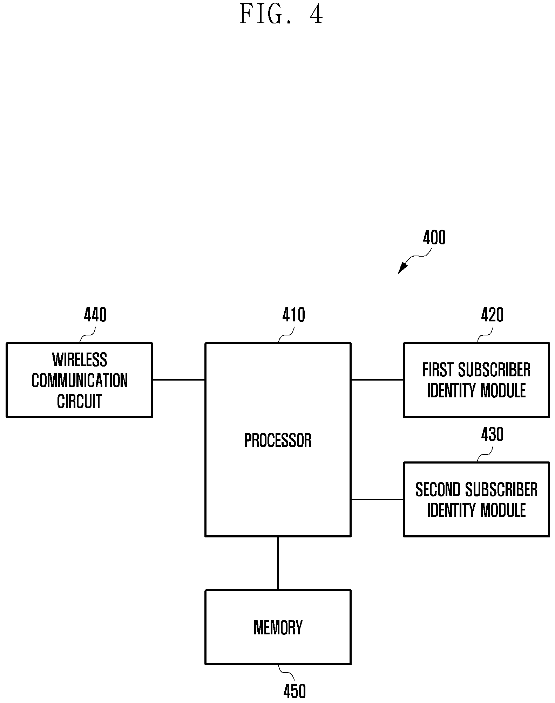

FIG. 4 is a block diagram of an electronic device supporting a plurality of subscriber identity modules, according to various embodiments. According to an embodiment, the electronic device 400 of FIG. 4 may be at least partially similar to the electronic device 101 of FIGS. 1, 2, or 3, or may further include other embodiments of the electronic device.

According to various embodiments referring to FIG. 4, the electronic device 400 may include a processor 410, a first subscriber identity module (SIM) 420, a second subscriber identity module 430, a wireless communication circuit 440, and/or a memory 450. According to an embodiment, the processor 410 may be substantially the same as the processor 120 of FIG. 1 or included in the processor 120. The first subscriber identity module 420 and the second subscriber identity module 430 may be substantially the same as the subscriber identity module 196 of FIG. 1 or included in the subscriber identity module 196. The wireless communication circuit 440 may be substantially the same as the wireless communication module 192 of FIG. 1 or included in the wireless communication module 192. The memory 450 may be substantially the same as the memory 130 of FIG. 1 or included in the memory 130. According to various embodiments, the electronic device 400 includes the first subscriber identity module 420 and the second subscriber identity module 430, but is not limited thereto.

According to various embodiments, the processor 410 may control the first subscriber identity module 420, the second subscriber identity module 430, the wireless communication circuit 440, and/or the memory 450 that are operatively connected thereto. According to an embodiment, the processor 410 may include an application processor (AP) (e.g., the main processor 121 of FIG. 1) and/or a communication processor (CP) (e.g., the auxiliary processor 123 of FIG. 1 or the communication module 190 of FIG. 1). According to an embodiment, the communication processor may include a first processing part and a second processing part. For example, the first processing part may communicate with a first node (e.g., a base station or a transmission node) of a first wireless network (e.g., an NR network). As an example, the first processing part may transmit and/or receive control messages and/or data with the first node via the first wireless network. For example, the second processing part may perform wireless communication with a second node (e.g., a base station or a transmission node) of a second wireless network (e.g., an LTE network). As an example, the second processing part may transmit and/or receive control messages and/or data with the second node via the second wireless network. For example, the first processing part and the second processing part may be composed of software that processes signals and protocols of different frequency bands. For example, the first processing part and the second processing part may be composed of different circuits or different hardware. For example, the first processing part and the second processing part may be logically (e.g., software) separated parts.

According to various embodiments, the subscriber identity modules 420 and 430 may store subscriber identity information (e.g., international mobile subscriber identity (IMSI)) for access, authentication, billing, and/or security in a wireless network and/or network configuration information. According to an embodiment, the first subscriber identity module 420 may store first subscriber identity information and/or first network configuration information for use by the electronic device 400 to access the network of a first communication business operator. For example, the first network configuration information may include at least one of network information (e.g., public land mobile network (PLMN) information) registered based on the first subscriber identity information and information related to a preferred PLMN (e.g., PPLMN (preferred PLMN)) list or a forbidden PLMN (e.g., FPLMN (forbidden PLMN)) list. For example, registered network information may be stored in the location information (LOCI) field of the first subscriber identity module 420. According to an embodiment, the second subscriber identity module 430 may store second subscriber identity information and/or second network configuration information for the electronic device 400 to access the network of the first communication business operator. For example, the second network configuration information may include at least one of network information (e.g., PLMN information) registered based on the second subscriber identity information and information related to a preferred PLMN list or a forbidden PLMN list. For example, the registered network information may be stored in the LOCI field of the second subscriber identity module 430.

According to various embodiments, the subscriber identity module 420 and/or 430 may be configured in the form of an integrated circuit (IC) card and mounted in a slot of the electronic device 400. According to another embodiment, at least one of the subscriber identity modules 420 and/or 430 may be configured in the form of an embedded SIM (eSIM) (or embedded universal integrated circuit card (eUICC)) directly embedded in the electronic device 400. For example, when the subscriber identity module 420 and/or 430 is configured in the form of an eSIM, the electronic device 400 may store information related to the subscriber identity module 520 and/or 530 via remote SIM provisioning in a security chip disposed on a circuit board of the electronic device 400 during a manufacturing process of the electronic device 400.

According to various embodiments, the processor 410 may control the wireless communication circuit 440 to communicate with a wireless network based on subscriber identity information stored in the subscriber identity module 420 and/or 430, and/or network configuration information. According to an embodiment, the processor 410 may control the wireless communication circuit 440 to perform wireless communication based on first subscriber identity information and/or first network configuration information stored in the first subscriber identity module 420 through a first communication protocol stack (e.g., the first communication protocol stack 314 of FIG. 3). As an example, the first communication protocol stack is a communication function supporting wireless communication related to the first subscriber identity module 420 and may be executed by the processor 410 (e.g., a CP) for wireless communication based on first subscriber identity information and/or first network configuration information. According to an embodiment, the processor 410 may control the wireless communication circuit 440 to perform wireless communication based on second subscriber identity information and/or second network configuration information stored in the second subscriber identity module 430 through a second communication protocol stack (e.g., the second communication protocol stack 316 of FIG. 3). As an example, the second communication protocol stack is a communication function supporting wireless communication related to the second subscriber identity module 430 and may be executed by the processor 410 (e.g., a CP) for wireless communication based on second subscriber identity information and/or second network configuration information.

According to various embodiments, the processor 410 may perform wireless communication by sharing network configuration information stored in the subscriber identity modules 420 and 430. According to an embodiment, when performing wireless communication by using the second subscriber identity module 430, the processor 410 (e.g., the second communication protocol stack) may identify whether the first network configuration information stored in the first subscriber identity module 420 may be used. When it is determined that the first network configuration information stored in the first subscriber identity module 420 may be used, the processor 410 (e.g., the second communication protocol stack) may control the wireless communication circuit 440 to perform a network search for the second subscriber identity module 430 based on the first network configuration information.

According to an embodiment, the processor 410 may share the first network configuration information of the first subscriber identity module 420 and/or the second network configuration information of the second subscriber identity module 430 for performing wireless communication by using a shared memory (e.g., the memory 450). For example, when using the first subscriber identity module 420, the processor 410 may store (e.g., load) the first subscriber identity information and/or the first network configuration information of the first subscriber identity module 420 in the shared memory (e.g., the memory 450). For example, when the electronic device 400 is booted (e.g., first booted) or the first subscriber identity information and/or the first network configuration information stored in the first subscriber identity module 420 is updated, the first subscriber identity information and/or the first network configuration information of the first subscriber identity module 420 may be stored (or updated) in the shared memory. For example, when using the second subscriber identity module 430, the processor 410 may store (e.g., load) the second subscriber identity information and/or the second network configuration information of the second subscriber identity module 430 in the shared memory (e.g., the memory 440). For example, when the electronic device 400 is booted (e.g., first booted) or the second subscriber identity information and/or the second network configuration information stored in the second subscriber identity module 430 is updated, the second subscriber identity information and/or the second network configuration information of the second subscriber identity module 430 may be stored (or updated) in the shared memory. For example, when performing wireless communication using the second subscriber identity module 430, the processor 410 may perform wireless communication by using the first network configuration information of the first subscriber identity module 420 stored in the shared memory, the second subscriber identity information of the second subscriber identity module 430, and/or the second network configuration information of the second subscriber identity module 430.

According to an embodiment, the processor 410 may obtain network configuration information from the first subscriber identity module 420 and/or the second subscriber identity module 430 in order to share the network configuration information. For example, when wireless communication is performed by using the second subscriber identity module 430, the second communication protocol stack may obtain first network configuration information from the first subscriber identity module 430. The second communication protocol stack may perform wireless communication by using the second network configuration information of the second subscriber identity module 430 and the first network configuration information obtained from the first subscriber identity module 430.

According to various embodiments, the processor 410 may perform wireless communication by sharing public land mobile network (PLMN) information stored in the subscriber identity modules 420 and 430. According to an embodiment, when registered to the first network by using the first subscriber identity module 420, the processor 410 (e.g., the first communication protocol stack) may update PLMN information of the first subscriber identity module 420 based on PLMN information provided from the first network.

According to an embodiment, when performing wireless communication by using the second subscriber identity module 430, the processor 410 (e.g., the second communication protocol stack) may determine whether the PLMN information of the first subscriber identity module 420 may be used. According to an embodiment, when it is determined that the PLMN information of the first subscriber identity module 420 may be used, the processor 410 (e.g., the second communication protocol stack) may perform a network search for the second subscriber identity module 430, based on the PLMN information of the first subscriber identity module 420. For example, when it is determined that the PLMN information of the first subscriber identity module 420 may be used, the processor 410 (e.g., the second communication protocol stack) may update the PLMN information of the second subscriber identity module 430, based on the PLMN information of the first subscriber identity module 420. The processor 410 (e.g., the second communication protocol stack) may perform a network search, based on PLMN information of the second subscriber identity module 430 updated based on the PLMN information of the first subscriber identity module 420. For example, the network search based on the PLMN information of the second subscriber identity module 430 may include a series of operations of firstly searching whether a network corresponding to the PLMN information of the second subscriber identity module 430 exists. For example, when the PLMN information of the first subscriber identity module 420 corresponds to location information (e.g., a country) of the electronic device 101, registration to the network corresponding to the PLMN information of the first subscriber identity module 420 is completed, and the PLMN information of the first subscriber identity module 420 and the second subscriber identity module 430 are different, the processor 410 (e.g., the second communication protocol stack) may determine that the PLMN information of the first subscriber identity module 420 may be used.

According to an embodiment, when it is determined that the PLMN information of the first subscriber identity module 420 may not be used, the processor 410 (e.g., the second communication protocol stack) may perform a network search to search for a network adjacent to the electronic device 400. For example, when the PLMN information corresponding to location information (e.g., a country) of the electronic device 101 does not exist in the first subscriber identity module 420, registration to the network corresponding to the PLMN information of the first subscriber identity module 420 has failed, or the PLMN information of the first subscriber identity module 420 and the second subscriber identity module 430 are same, the processor 410 (e.g., the second communication protocol stack) may determine that the PLMN information of the first subscriber identity module 420 may not be used.

According to various embodiments, the processor 410 may perform wireless communication by sharing preferred PLMN list information stored in the subscriber identity modules 420 and 430. According to an embodiment, when the preferred PLMN list does not exist in the second subscriber identity module 430, the processor 410 (e.g., the second communication protocol stack) may determine whether the preferred PLMN list of the first subscriber identity module 420 may be used. According to an embodiment, when it is determined that the preferred PLMN list of the first subscriber identity module 420 may be used, the processor 410 (e.g., the second communication protocol stack) may perform a network search for the second subscriber identity module 430, based on the preferred PLMN list of the first subscriber identity module 420. For example, when it is determined that the preferred PLMN list of the first subscriber identity module 420 may be used, the processor 410 (e.g., the second communication protocol stack) may update the preferred PLMN list of the second subscriber identity module 430, based on the preferred PLMN list of the first subscriber identity module 420. The processor 410 (e.g., the second communication protocol stack) may perform a network search, based on the preferred PLMN list of the second subscriber identity module 430 updated based on the preferred PLMN list of the first subscriber identity module 420. For example, the network search based on the preferred PLMN list of the second subscriber identity module 430 may include a series of operations of firstly searching whether a network corresponding to the PLMN information of the preferred PLMN list of the second subscriber identity module 430 exists. For example, when the preferred PLMN list of the first subscriber identity module 420 corresponds to location information (e.g., a country) of the electronic device 101 and the preferred PLMN lists of the first subscriber identity module 420 and the second subscriber identity module 430 are different, the processor 410 (e.g., the second communication protocol stack) may determine that the preferred PLMN list of the first subscriber identity list 420 may be used. According to an embodiment, when it is determined that the preferred PLMN list of the first subscriber identity module 420 may not be used, the processor 410 (e.g., the second communication protocol stack) may perform a network search. For example, when the preferred PLMN list corresponding to the location information (e.g., a country) of the electronic device 101 does not exist in the first subscriber identity module 420, or the preferred PLMN lists of the first subscriber identity module 420 and the second subscriber identity module 430 are same, the processor 410 (e.g., the second communication protocol stack) may determine that the preferred PLMN list of the first subscriber identity list 420 may not be used.

According to an embodiment, when the PLMN of the network registered using the second subscriber identity module 430 satisfies a specified first condition, the processor 410 (e.g., the second communication protocol stack) may determine whether the preferred PLMN list of the first subscriber identity module 420 may be used. According to an embodiment, when it is determined that the preferred PLMN list of the first subscriber identity module 420 may be used, the processor 410 (e.g., the second communication protocol stack) may perform a network search for the second subscriber identity module 430, based on the preferred PLMN list of the first subscriber identity module 420. For example, the status in which the specified first condition is satisfied may include a status in which the network registered using the second subscriber identity module 430 is not the top network in the preferred PLMN list of the second subscriber identity module 430. For example, when the network registered using the second subscriber identity module 430 is the top network in the preferred PLMN list of the second subscriber identity module 430, the processor 410 (e.g., the second communication protocol stack) may determine that the specified first condition is not satisfied. For example, when the network registered by using the first subscriber identity module 420 is included in the preferred PLMN list of the first subscriber identity module 420, the network registered by using the first subscriber identity module 420 is not included in the preferred PLMN list of the second subscriber identity module 430, the preferred PLMN list of the first subscriber identity module 420 corresponds to location information (e.g., a country) of the electronic device 101, and the preferred PLMN lists of the first subscriber identity module 420 and the second subscriber identity module 430 are different, the processor 410 (e.g., the second communication protocol stack) may determine that the preferred PLMN list of the first subscriber identity list 420 may be used.

According to various embodiments, the processor 410 may update a preferred PLMN search period of the subscriber identity module 420 or 430. According to an embodiment, when the PLMN of the network registered by using the second subscriber identity module 430 satisfies the specified first condition, the processor 410 (e.g., the second communication protocol stack) may perform a search for a network included in the preferred PLMN list at a specified period. As an example, the status in which the specified first condition is satisfied may include a status in which the network registered using the second subscriber identity module 430 is not the top network in the preferred PLMN list of the second subscriber identity module 430.

According to an embodiment, when the top network included in the preferred PLMN list of the second subscriber identity module 430 is not searched based on the network search, the processor 410 (e.g., the second communication protocol stack) may update a network search period included in the preferred PLMN list based on the preferred PLMN list of the first subscriber identity module 420. For example, when the PLMN of the network registered using the second subscriber identity module 430 satisfies a specified second condition, the processor 410 (e.g., the second communication protocol stack) may update a network search period included in the preferred PLMN list. As an example, the status in which the specified second condition is satisfied may include a status in which the network registered using the second subscriber identity module 430 is the top network in the preferred PLMN list of the first subscriber identity module 420. For another example, when the PLMN of the network registered using the second subscriber identity module 430 does not satisfy the specified second condition, the processor 410 (e.g., the second communication protocol stack) may search a network included in the preferred PLMN list based on a specified period. As an example, the status in which the specified second condition is not satisfied may include a status in which the network registered using the second subscriber identity module 430 is not the top network in the preferred PLMN list of the first subscriber identity module 420.

According to various embodiments, the processor 410 may perform wireless communication by sharing forbidden PLMN list information stored in the subscriber identity modules 420 and 430. According to an embodiment, when registration is rejected from the network in response to a registration request using the first subscriber identity module 420, the processor 410 (e.g., the first communication protocol stack) may add a corresponding network to the forbidden PLMN list, based on a reject cause from the network. For example, when the reject cause provided by the network is "reject cause 11" (e.g., TS 124.008), the processor 410 (e.g., the first communication protocol stack) may determine that the corresponding network is a network that may not be registered by using the first subscriber identity module 420. Accordingly, the processor 410 may add the corresponding network to the forbidden PLMN list of the first subscriber identity module 420.

According to an embodiment, when performing wireless communication by using the second subscriber identity module 430, the processor 410 (e.g., the second communication protocol stack) may determine whether the forbidden PLMN list of the first subscriber identity module 420 may be used. According to an embodiment, when it is determined that the forbidden PLMN list of the first subscriber identity module 420 may be used, the processor 410 (e.g., the second communication protocol stack) may perform a network search for the second subscriber identity module 430, based on the forbidden PLMN list of the first subscriber identity module 420. For example, when it is determined that the forbidden PLMN list of the first subscriber identity module 420 may be used, the processor 410 (e.g., the second communication protocol stack) may update the forbidden PLMN list of the second subscriber identity module 430, based on the forbidden PLMN list of the first subscriber identity module 420. The processor 410 (e.g., the second communication protocol stack) may perform a network search, based on the forbidden PLMN list of the second subscriber identity module 430 updated based on the forbidden PLMN list of the first subscriber identity module 420. As an example, the network search based on the forbidden PLMN list of the second subscriber identity module 430 may include a series of operations of searching for a network other than the network corresponding to PLMN information in the forbidden PLMN list of the second subscriber identity module 430. For example, when registered to the network by using the first subscriber identity module 420, the forbidden PLMN list of the first subscriber identity module 420 corresponds to location information (e.g., a country) of the electronic device 101, and the forbidden PLMN lists of the first subscriber identity module 420 and the second subscriber identity module 430 are different, the processor 410 (e.g., the second communication protocol stack) may determine that the forbidden PLMN list of the first subscriber identity list 420 may be used.

According to various embodiments, when performing wireless communication using the second subscriber identity module 430, the processor 410 may share first network configuration information of the first subscriber identity module 420 in an inactive state. For example, the first subscriber identity module 420 in the inactive state may include a status in which a service is not obtained from a communication business operator while the first subscriber identity module 420 is installed in the electronic device 101.

According to various embodiments, the wireless communication circuit 440 may receive a signal from an external device or transmit a signal to the outside through an antenna (not illustrated). According to an embodiment, the wireless communication circuit 440 may include an RFIC (e.g., the first RFIC 222 of FIG. 2) and an RFFE (e.g., the first RFFE 232 of FIG. 2) for communication with an external device.

According to various embodiments, the memory 450 may at least temporarily store various data used by at least one component (e.g., the processor 410 or the wireless communication circuit 440) of the electronic device 400. For example, the data may include first subscriber identity information, first network configuration information, second subscriber identity information, and/or second network configuration information. For example, the first subscriber identity information, the first network configuration information, the second subscriber identity information, and/or the second network configuration information may be loaded from the first subscriber identity module 420 and/or the second subscriber identity module 430 and stored in the memory 450 (e.g., a shared memory). For example, the first subscriber identity information, the first network configuration information, the second subscriber identity information, and/or the second network configuration information may be loaded from the first subscriber identity module 420 and/or the second subscriber identity module 430 and stored in the memory 450 when the electronic device 400 is initially booted or information on the first subscriber identity module 420 and/or the second subscriber identity module 430 is updated. For example, the first network configuration information and/or the second network configuration information may include at least one of PLMN information (e.g., LOCI information), a preferred PLMN list, and a forbidden PLMN list. For example, storage of the first network configuration information and/or the second network configuration information in the memory 450 (or a shared memory) may be maintained even if the power supply of the electronic device 101 is cut off or the electronic device 101 is rebooted. As another example, the first network configuration information and/or the second network configuration information may be deleted from the memory 450 (or a shared memory) when the power supply of the electronic device 101 is cut off or the electronic device 101 is rebooted. According to an embodiment, the memory 450 may store PLMN information for each wireless network (e.g., 2G, 3G, LTE, and/or NR). According to an embodiment, the memory 450 may store a preferred PLMN list and/or a forbidden PLMN list for each location (e.g., a country) of the electronic device 400. According to an embodiment, the memory 450 may store various instructions that may be executed by the processor 410.

According to various embodiments, an electronic device (e.g., the electronic device 101 of FIG. 1, FIG. 2, or FIG. 3 or the electronic device 400 of FIG. 4) may include a first subscriber identity module (e.g., the subscriber identity module 196 of FIG. 1 or the first subscriber identity module 420 of FIG. 4), a second subscriber identity module (e.g., the subscriber identity module 196 of FIG. 1 or the second subscriber identity module 430 of FIG. 4), a wireless communication circuit (e.g., the wireless communication module 192 of FIG. 1 or FIG. 2 or the wireless communication circuit 440 of FIG. 4), and a processor (e.g., the processor 120 of FIG. 1 or FIG. 2, the first communication processor 212 and the second communication processor 214 of FIG. 2, or the processor 410 of FIG. 4) operatively connected to the first subscriber identity module, the second subscriber identity module, and the wireless communication circuit, and the processor may make a registration to a first network through the wireless communication circuit, based on first subscriber identity information and/or first network configuration information of the first subscriber identity module, identify the first network configuration information, based on the registration to the first network, and perform a network search corresponding to the second subscriber identity module, based on the identified first network configuration information.

According to various embodiments, the first subscriber identity module and the second subscriber identity module may store different subscriber identity information related to a same communication business operator.

According to various embodiments, the first network configuration information may include at least one of public land mobile network (PLMN) information, a first preferred PLMN list, or a first forbidden PLMN list of a network registered based on the first subscriber identity information, and the second network configuration information may include at least one of PLMN information, a second preferred PLMN list, or a second forbidden PLMN list of a network registered based on second subscriber identity information of the second subscriber identity module.

According to various embodiments, the processor may identify PLMN information of the first network when registered in the first network based on the first subscriber identity information and/or the first network configuration information, and update the first network configuration information, based on the PLMN information of the first network.

According to various embodiments, the processor may perform a network search corresponding to the second subscriber identity module, based on the PLMN information of the first network when the PLMN information of the first network corresponds to the location information (e.g., a country) of the electronic device based on the updated first network configuration information.

According to various embodiments, the processor may identify whether the second preferred PLMN list exists in the second subscriber identity module when the first network registered based on the first subscriber identity information and/or the first network configuration information of the first subscriber identity module is included in the first preferred PLMN list of the first network configuration information, generate the second PLMN list of the second subscriber identity module, based on the first preferred PLMN list when the second preferred PLMN list does not exist in the second subscriber identity module, and perform a network search corresponding to the second subscriber identity module, based on the generated second preferred PLMN list.

According to various embodiments, the processor may update the second PLMN list of the second subscriber identity module, based on the first preferred PLMN list, when the first network registered based on the first subscriber identity information and/or the first network configuration information of the first subscriber identity module is included in the first preferred PLMN list of the first subscriber identity module, the first network is not included in the second preferred PLMN list of the second subscriber identity module, and the first preferred PLMN list corresponds to the location information of the electronic device, and perform a network search corresponding to the second subscriber identity module, based on the updated second preferred PLMN list.

According to various embodiments, the processor may perform a search for a second network that is a top network included in the second preferred PLMN list of the second subscriber identity information, identify whether the first network registered based on the first subscriber identity information and/or the first network configuration information of the first subscriber identity module is the top network included in the first preferred PLMN list of the first subscriber identity information, when the search for the second network fails, and update the search period of the second network, when the first network is the top network included in the first preferred PLMN list of the first subscriber identity information.

According to various embodiments, when registered to the first network, the processor may update the second forbidden PLMN list of the second subscriber identity module based on the first forbidden PLMN list of the first subscriber identity module, and perform a network search corresponding to the second subscriber identity module based on the updated second forbidden PLMN list.

According to various embodiments, an electronic device (e.g., the electronic device 101 of FIG. 1, FIG. 2, or FIG. 3 or the electronic device 400 of FIG. 4) may include a first subscriber identity module (e.g., the subscriber identity module 196 of FIG. 1 or the first subscriber identity module 420 of FIG. 4), a second subscriber identity module (e.g., the subscriber identity module 196 of FIG. 1 or the second subscriber identity module 430 of FIG. 4), a wireless communication circuit (e.g., the wireless communication module 192 of FIG. 1 or FIG. 2 or the wireless communication circuit 440 of FIG. 4), and a processor (e.g., the processor 120 of FIG. 1 or FIG. 2, the first communication processor 212 and the second communication processor 214 of FIG. 2, or the processor 410 of FIG. 4) operatively connected to the first subscriber identity module, the second subscriber identity module, and the wireless communication circuit, and the processor may identify information related to the registration failure through the wireless communication circuit, when registration to a first network fails based on the first subscriber identity information of the first subscriber identity module, update a first forbidden PLMN list stored in the first subscriber identity module, based on the information related to the registration failure, and perform a network search corresponding to the second subscriber identity module, based on the updated first forbidden PLMN list.

According to various embodiments, the processor may update the second forbidden PLMN list of the second subscriber identity module based on the updated first forbidden PLMN list, and perform a network search corresponding to the second subscriber identity module based on the updated second forbidden PLMN list.

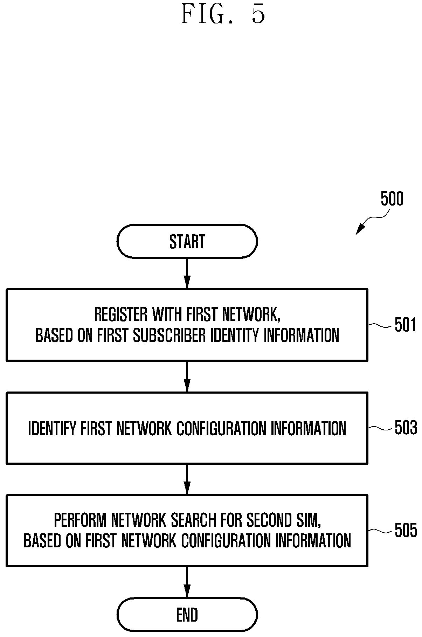

FIG. 5 is a flowchart 500 for sharing information on subscriber identity modules in an electronic device according to various embodiments. In the following embodiment, operations may be performed sequentially, but are not necessarily performed sequentially. For example, the order of operations may be changed, and at least two operations may be performed in parallel. As an example, the electronic device of FIG. 5 may be the electronic device 101 of FIG. 1, FIG. 2, or FIG. 3 or the electronic device 400 of FIG. 4.

According to various embodiments of the disclosure referring to FIG. 5, in operation 501, the electronic device (e.g., the processor 120 of FIG. 1 or the processor 410 of FIG. 4) may be registered to a first network, based on first subscriber identity information and/or first network configuration information of the first subscriber identity module 420. According to an embodiment, the processor 410 (e.g., the first communication protocol stack) may perform a network search for the first subscriber identity module 420. For example, the processor 410 (e.g., the first communication protocol stack) may perform a network search, based on the PLMN information, the preferred PLMN list, and/or the forbidden PLMN list of the first subscriber identity module 420. According to an embodiment, the processor 410 (e.g., the first communication protocol stack) may control the wireless communication circuit 440 to transmit a registration request message including the first subscriber identity information of the first subscriber identity module 420 to the first network found through the network search. According to an embodiment, when the processor 410 (e.g., the first communication protocol stack) receives a registration accept message as a response to the registration request message through the wireless communication circuit 440, it may be determined that the processor is registered to the first network.

According to various embodiments, in operation 503, the electronic device (e.g., the processor 120 or 410) may identify first network configuration information of the first subscriber identity module 420. According to an embodiment, when performing wireless communication by using the second subscriber identity module 430, the processor 410 (e.g., the second communication protocol stack) may obtain first network configuration information of the first subscriber identity module 420. For example, the processor 410 (e.g., the second communication protocol stack) may obtain first network configuration information of the first subscriber identity module 420 from a shared memory. For example, the processor 410 (e.g., the second communication protocol stack) may obtain first network configuration information from the first subscriber identity module 420.

According to an embodiment, the processor 410 (e.g., the second communication protocol stack) may determine whether the first network configuration information of the first subscriber identity module 420 may be used. For example, when the PLMN information of the first subscriber identity module 420 corresponds to location information (e.g., a country) of the electronic device 101, registration to the network corresponding to the PLMN information of the first subscriber identity module 420 is completed by using the first subscriber identity module 420, and the PLMNs of the first subscriber identity module 420 and the second subscriber identity module 430 are different, the processor 410 (e.g., the second communication protocol stack) may determine that the PLMN information of the first subscriber identity module 420 may be used for wireless communication using the second subscriber identity module 430.

For example, when the preferred PLMN list of the first subscriber identity module 420 corresponds to location information (e.g., a country) of the electronic device 101 and the preferred PLMN lists of the first subscriber identity module 420 and the second subscriber identity module 430 are different, the processor 410 (e.g., the second communication protocol stack) may determine that the preferred PLMN list of the first subscriber identity list 420 may be used for wireless communication using the second subscriber identity module 430. For example, when it is determined that the preferred PLMN list of the first subscriber identity list 420 may be used for wireless communication using the second subscriber identity module 430, the processor 410 (e.g., the second communication protocol stack) may update the preferred PLMN list of the second subscriber identity module 430, based on the preferred PLMN list of the first subscriber identity module 420. As an example, the processor 410 (e.g., the second communication protocol stack) may update the preferred PLMN list of the second subscriber identity module 430 stored in the shared memory, based on the preferred PLMN list of the first subscriber identity module 420. As an example, the processor 410 (e.g., the second communication protocol stack) may update the preferred PLMN list stored in the second subscriber identity module 430, based on the preferred PLMN list of the first subscriber identity module 420.

For example, when the network registered by using the first subscriber identity module 420 is included in the preferred PLMN list of the first subscriber identity module 420, the network registered by using the first subscriber identity module 420 is not included in the preferred PLMN list of the second subscriber identity module 430, the preferred PLMN list of the first subscriber identity module 420 corresponds to location information (e.g., a country) of the electronic device 101, and the preferred PLMN lists of the first subscriber identity module 420 and the second subscriber identity module 430 are different, the processor 410 (e.g., the second communication protocol stack) may determine that the preferred PLMN list of the first subscriber identity list 420 may be used for wireless communication using the second subscriber identity module 430. For example, when it is determined that the preferred PLMN list of the first subscriber identity list 420 may be used for wireless communication using the second subscriber identity module 430, the processor 410 (e.g., the second communication protocol stack) may update the preferred PLMN list of the second subscriber identity module 430, based on the preferred PLMN list of the first subscriber identity module 420.

For example, when registered to the network by using the first subscriber identity module 420, the forbidden PLMN list of the first subscriber identity module 420 corresponds to location information (e.g., a country) of the electronic device 101, and the forbidden PLMN lists of the first subscriber identity module 420 and the second subscriber identity module 430 are different, the processor 410 (e.g., the second communication protocol stack) may determine that the forbidden PLMN list of the first subscriber identity list 420 may be used for wireless communication using the second subscriber identity module 430. For example, when it is determined that the forbidden PLMN list of the first subscriber identity list 420 may be used for wireless communication using the second subscriber identity module 430, the processor 410 (e.g., the second communication protocol stack) may update the forbidden PLMN list of the second subscriber identity module 430, based on the forbidden PLMN list of the first subscriber identity module 420. As an example, the processor 410 (e.g., the second communication protocol stack) may update the forbidden PLMN list of the second subscriber identity module 430 stored in the shared memory, based on the forbidden PLMN list of the first subscriber identity module 420. As an example, the processor 410 (e.g., the second communication protocol stack) may update the forbidden PLMN list stored in the second subscriber identity module 430, based on the forbidden PLMN list of the first subscriber identity module 420.

According to various embodiments, in operation 505, the electronic device (e.g., the processor 120 or 410) may perform a network search for the second subscriber identity module 430, based on the first network configuration information. According to an embodiment, the processor 410 (e.g., the second communication protocol stack) may first identify whether a network corresponding to the PLMN information of the first subscriber identity module 420 exists, through a network search. For example, when a network corresponding to the PLMN information of the first subscriber identity module 420 is searched, the processor 410 (e.g., the second communication protocol stack) may perform a registration process with the searched network, based on the second subscriber identity information. For example, when a network corresponding to the PLMN information of the first subscriber identity module 420 is not searched, the processor 410 (e.g., the second communication protocol stack) may identify whether another network adjacent to the electronic device 400 exists, based on the network search result. The processor 410 (e.g., the second communication protocol stack) may perform a registration process with a network selected based on received signal strength indication (RSSI) among other networks adjacent to the electronic device 400, based on the second subscriber identity information.

According to an embodiment, the processor 410 (e.g., the second communication protocol stack) may first identify whether a network corresponding to the PLMN information included in the preferred PLMN list of the first subscriber identity module 420 exists through network search. For example, when a network included in the preferred PLMN list of the first subscriber identity module 420 is searched, the processor 410 (e.g., the second communication protocol stack) may perform a registration process with the searched network, based on the second subscriber identity information. For example, when a network corresponding to the PLMN information of the first subscriber identity module 420 is not searched, the processor 410 (e.g., the second communication protocol stack) may perform a registration process with the network selected based on RSSI among other networks adjacent to the electronic device 400, based on the second subscriber identity information.

According to an embodiment, the processor 410 (e.g., the second communication protocol stack) may limit the search for networks corresponding to PLMN information included in the forbidden PLMN list of the first subscriber identity module 420. For example, when a network included in the forbidden PLMN list is searched through network search, the processor 410 (e.g., the second communication protocol stack) may determine that there is no network that may be registered based on the second subscriber identity information.

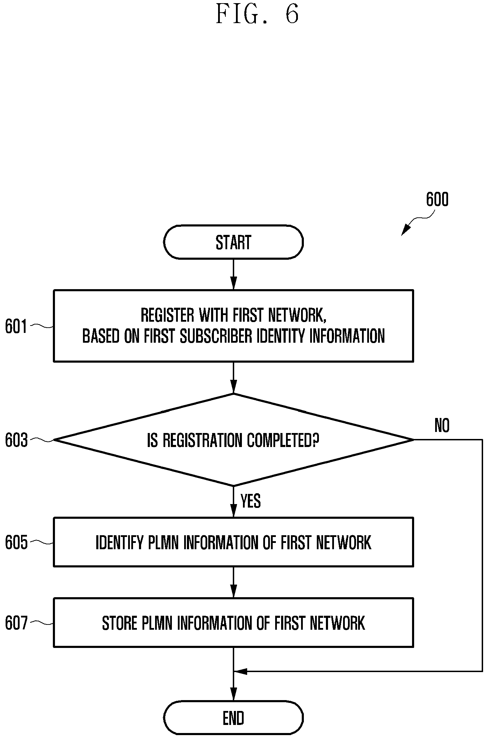

FIG. 6 is a flowchart 600 for updating information on a first subscriber identity module in an electronic device according to various embodiments. According to an embodiment, the operations of FIG. 6 may be detailed operations of operation 501 of FIG. 5. In the following embodiment, operations may be performed sequentially, but are not necessarily performed sequentially. For example, the order of operations may be changed, and at least two operations may be performed in parallel. As an example, the electronic device of FIG. 6 may be the electronic device 101 of FIG. 1, FIG. 2, or FIG. 3 or the electronic device 400 of FIG. 4.

According to various embodiments of the present disclosure referring to FIG. 6, in operation 601, the electronic device (e.g., the processor 120 of FIG. 1 or the processor 410 of FIG. 4) may transmit a registration request message to a first network, based on the first subscriber identity information of the first subscriber identity module 420. According to an embodiment, the processor 410 (e.g., the first communication protocol stack) may perform a network search for the first subscriber identity module 420, based on the first network configuration information. The processor 410 (e.g., the first communication protocol stack) may control the wireless communication circuit 440 to transmit a registration request message including the first subscriber identity information of the first subscriber identity module 420 to the first network found through the network search.

According to various embodiments, in operation 603, the electronic device (e.g., the processor 120 or 410) may determine whether registration to the first network is completed based on the registration request message. According to an embodiment, when receiving a registration accept message as a response to the registration request message through the wireless communication circuit 440, the processor 410 (e.g., the first communication protocol stack) may determine that registration to the first network is completed.

According to various embodiments, when the registration to the first network is not completed (e.g., 'No' in operation 603), the electronic device (e.g., the processor 120 or 410) may terminate an embodiment for updating information on the first subscriber identity module.

According to various embodiments, when the registration to the first network is completed (e.g., 'Yes' in operation 603), in operation 605, the electronic device (e.g., the processor 120 or 410) may identify PLMN information of the first network registered based on the first subscriber identity information. According to an embodiment, the processor 410 (e.g., the first communication protocol stack) may receive "last visited registered TAI" information and "evolution packet system (EPS) update status" information from the first network registered based on the first subscriber identity information. For example, the "last visited registered TAI" information may include PLMN information and tracking area code (TAC) information of the first network. For example, the "EPS update status" information includes a registration status with the first network, and may include information related to registration completion (updated) or registration rejection (non-updated or roaming not allowed).

According to various embodiments, in operation 607, the electronic device (e.g., the processor 120 or 410) may store PLMN information of the first network in the first subscriber identity module 420. According to an embodiment, the processor 410 (e.g., the first communication protocol stack) may update first network configuration information of the first subscriber identity module 420 to include PLMN information of the first network. For example, the processor 410 (e.g., the first communication protocol stack) may add PLMN information of the first network in which the electronic device 400 is registered based on the first subscriber identity information to the first network configuration information of the first subscriber identity module 420 stored in the shared memory. For example, the processor 410 (e.g., the first communication protocol stack) may add PLMN information of the first network in which the electronic device 400 is registered based on the first subscriber identity information to the first network configuration information stored in the first subscriber identity module 420. For example, when the first network is a 2G or 3G network, the first subscriber identity module 420 may store PLMN information of the first network in a location information (EF_LOCI) field or a packet switched location information (EF_PSLOCI) field. For example, when the first network is an LTE network, the first subscriber identity module 420 may store PLMN information of the first network in the EF_EPSLOCI field. For example, when the first network is an NR network, the first subscriber identity module 420 may store PLMN information of the first network in an EF_5GS3GPPLOCI field or an EF_5GSN3GPPLOCI field.

According to various embodiments, the electronic device 400 may obtain PLMN information from a network in which the electronic device 400 is registered through a tracking area update (TAU) procedure.

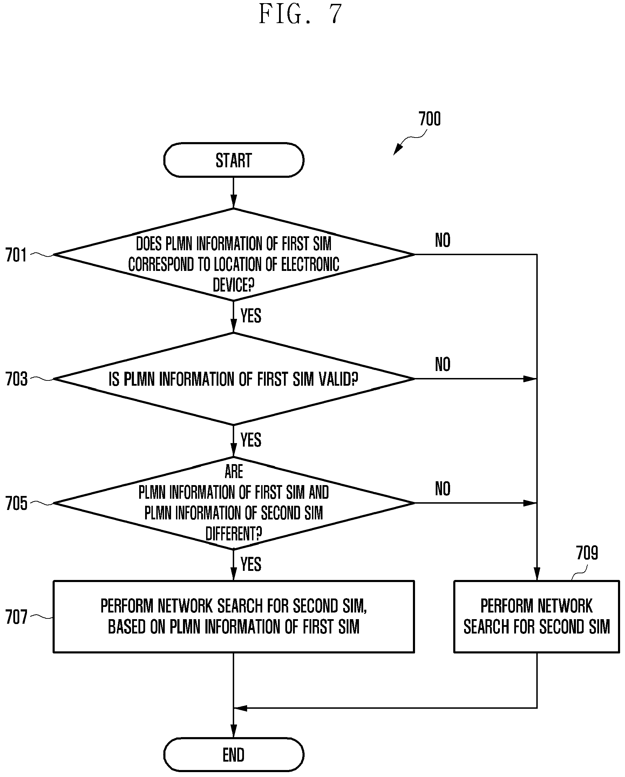

FIG. 7 is a flowchart 700 for updating PLMN information of a second subscriber identity module, based on PLMN information of a first subscriber identity module in an electronic device according to various embodiments. According to an embodiment, the operations of FIG. 7 may be detailed operations of operation 503 and operation 505 of FIG. 5. In the following embodiment, operations may be performed sequentially, but are not necessarily performed sequentially. For example, the order of operations may be changed, and at least two operations may be performed in parallel. As an example, the electronic device of FIG. 7 may be the electronic device 101 of FIG. 1, FIG. 2, or FIG. 3 or the electronic device 400 of FIG. 4.

According to various embodiments of the present disclosure referring to FIG. 7, when registered to the first network, based on the first subscriber identity information of the first subscriber identity module 420 (e.g., operation 501 of FIG. 5), in operation 701, the electronic device (e.g., the processor 120 of FIG. 1 or the processor 410 of FIG. 4) may identify whether the PLMN information of the first subscriber identity module 420 corresponds to the location of the electronic device 400. According to an embodiment, the processor 410 (e.g., the second communication protocol stack) may identify whether the PLMN information of the first subscriber identity module 420 corresponds to the location of the electronic device 400 to determine whether the PLMN information of the first subscriber identity module 420 may be used to perform a network search for the second subscriber identity module 430. For example, the processor 410 (e.g., the second communication protocol stack) may identify whether the PLMN information of the first subscriber identity module 420 is included in the country where the electronic device 400 is located. For example, the PLMN information of the first subscriber identity module 420 may include information stored in a LOCI field of the first subscriber identity module 420.

According to various embodiments, when the PLMN information of the first subscriber identity module 420 corresponds to the location of the electronic device 400 (e.g., 'Yes' in operation 701), in operation 703, the electronic device (e.g., the processor 120 or 410) may identify whether the PLMN information of the first subscriber identity module 420 is valid. According to an embodiment, when the PLMN information of the first subscriber identity module 420 is included in the country in which the electronic device 400 is located, the processor 410 (e.g., the second communication protocol stack) may determine that the PLMN information of the first subscriber identity module 420 corresponds to the location of the electronic device 400. When it is determined that the PLMN information of the first subscriber identity module 420 corresponds to the location of the electronic device 400, the processor 410 (e.g., the second communication protocol stack) may identify whether registration status information (e.g., "EPS update status" information) of the network stored in the first subscriber identity module 420 is registered. For example, as illustrated in Table 1 (e.g., the ETSI TS 124.301 standard), the processor 410 (e.g., the second communication protocol stack) may identify whether network registration status information (e.g., "EPS update status" information) stored in the first subscriber identity module 420 is configured to "EU1: UPDATED".

**[Table 1]**

| | | | |
|---|---|---|---|
| | 5.1.3.3 EPS update status | | |
| | In order to describe the detailed UE behaviour, the EPS update (EU) status pertaining to a | | |
| specific subscriber is defined. | | | |
| | The EPS update status is stored in a non-volatile memory in the USIM if the corresponding | | |
| file is present in the USIM, else in the non-volatile memory in the ME, as described in annex | | | |
| C. | | | |
| | The EPS update status value is changed only after the execution of an attach or combined | | |
| attach, network initiated detach, authentication, tracking area update or combined tracking | | | |
| area update, service request or paging for EPS services using IMSI procedure. | | | |
| | | EU1: UPDATED | |
| | | | The last attach or tracking area updating attempt was successful. |
| | | EU2: NOT UPDATED | |
| | | | The last attach, service request or tracking area updating attempt failed |
| procedurally, i.e. no response or reject message was received from the MME. | | | |
| | | EU3: ROAMING NOT ALLOWED | |
| | | | The last attach, service request or tracking area updating attempt was correctly |
| performed, but the answer from the MME was negative (because of roaming or subscription | | | |
| restrictions). | | | |

According to various embodiments, when the PLMN information of the first subscriber identity module 420 is valid (e.g., 'Yes' in operation 703), in operation 705, the electronic device (e.g., the processor 120 or 410) may identify whether the PLMN information of the first subscriber identity module 420 and the second subscriber identity module 430 are different. According to an embodiment, when the registration status information (e.g., "EPS update status" information) of the network stored in the first subscriber identity module 420 is registration complete (e.g., "EU1: updated"), the processor 410 (e.g., the second communication protocol stack) may determine that the PLMN information of the first subscriber identity module 420 is valid.

According to various embodiments, when the PLMN information of the first subscriber identity module 420 and the second subscriber identity module 430 are different (e.g., 'Yes' in operation 705), in operation 707, the electronic device (e.g., the processor 120 or 410) may perform a network search for the second subscriber identity module 430, based on the PLMN information of the first subscriber identity module 420. According to an embodiment, the processor 410 (e.g., the second communication protocol stack) may first identify whether a network corresponding to the PLMN information of the first subscriber identity module 420 exists through a network search.

According to various embodiments, when the PLMN information of the first subscriber identity module 420 does not correspond to the location of the electronic device 400 (e.g., 'No' in operation 701), the PLMN information of the first subscriber identity module 420 is invalid (e.g., 'No' in operation 703), or the PLMN information of the first subscriber identity module 420 and the second subscriber identity module 430 are the same (e.g., 'No' in operation 705), in operation 709, the electronic device (e.g., the processor 120 or 410) may perform a network search for the second subscriber identity module 430. According to various embodiments, when PLMN information corresponding to the location of the electronic device 400 does not exist in the first subscriber identity module 420, the PLMN information of the first subscriber identity module 420 is invalid, or the PLMN information of the first subscriber identity module 420 and the second subscriber identity module 430 are the same, the processor 410 (e.g., the second communication protocol stack) may determine that the PLMN information of the first subscriber identity module 420 may not be used to perform a network search for the second subscriber identity module 430. According to an embodiment, when it is determined that the PLMN information of the first subscriber identity module 420 may not be used, the processor 410 (e.g., the second communication protocol stack) may perform a network search for the second subscriber identity module 430. According to an embodiment, when the PLMN information of the second subscriber identity module 430 exists, the processor 410 (e.g., the second communication protocol stack) may perform a network search for the second subscriber identity module 430, based on the PLMN information of the second subscriber identity module 430. For example, the processor 410 (e.g., the second communication protocol stack) may first identify whether a network corresponding to the PLMN information of the second subscriber identity module 430 exists through a network search. For example, the PLMN information of the second subscriber identity module 430 may include PLMN information related to the network in which the electronic device 400 is registered based on the second subscriber identity information of the second subscriber identity module 430 or the previously registered network.

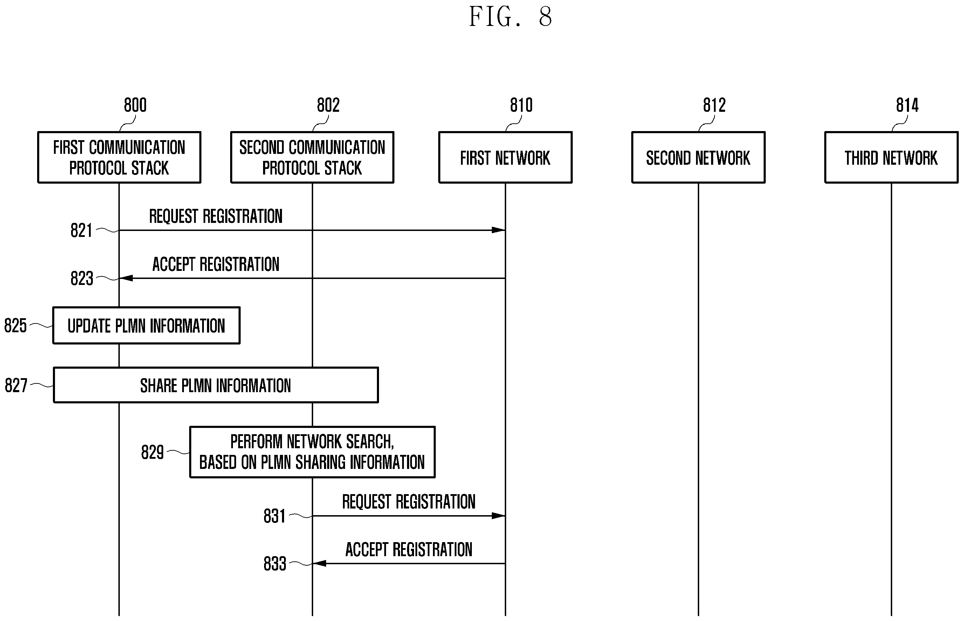

FIG. 8 is an example for sharing PLMN information between subscriber identity modules in an electronic device according to various embodiments.

According to various embodiments of the present disclosure referring to FIG. 8, a first communication protocol stack 800 corresponding to the first subscriber identity module 420 in the electronic device (e.g., the electronic device 400 of FIG. 4) may transmit a registration request message to a first network 810 (operation 821). For example, the registration request message may include first subscriber identity information of the first subscriber identity module 420.

According to various embodiments, when accepting registration of the electronic device (e.g., the electronic device 400 of FIG. 4) based on the first subscriber identity information, the first network 810 may transmit a registration acceptance message to the electronic device (e.g., the electronic device 400 of FIG. 4) (operation 823).

According to various embodiments, when receiving the registration acceptance message from the first network 810, the first communication protocol stack 800 may determine that registration to the first network 810 is completed based on the first subscriber identity information. The first communication protocol stack 800 may update (or generate) PLMN information of the first subscriber identity module 420, based on the PLMN information of the first network 810 registered based on the first subscriber identity information (operation 825). According to an embodiment, the first communication protocol stack 800 may add PLMN information of the first network 810 to first network configuration information of the first subscriber identity module 420 stored in the shared memory. According to an embodiment, the first communication protocol stack 800 may add PLMN information of the first network 810 to the first network configuration information stored in the first subscriber identity module 420. For example, when the first network 810 is an LTE network, the first subscriber identity module 420 may update the value of the EF_EPSLOCI field stored in the shared memory or the first subscriber identity module 420 with PLMN information of the first network 810.

According to various embodiments, a second communication protocol stack 802 corresponding to the second subscriber identity module 430 in the electronic device (e.g., the electronic device 400 of FIG. 4) may identify whether PLMN information of the first subscriber identity module 420 may be used for wireless communication based on the second subscriber identity module 430. According to an embodiment, when the PLMN information of the first subscriber identity module 420 corresponds to location information (e.g., a country) of the electronic device 101, registration to the network corresponding to the PLMN information of the first subscriber identity module 420 is completed by using the first subscriber identity module 420, and the PLMNs of the first subscriber identity module 420 and the second subscriber identity module 430 are different, the second communication protocol stack 802 may determine that the PLMN information of the first subscriber identity module 420 may be used.

According to various embodiments, when it is determined that the PLMN information of the first subscriber identity module 420 may be used, the second communication protocol stack 802 may share the PLMN information of the first subscriber identity module 420 (operation 827). According to an embodiment, the second communication protocol stack 802 may obtain the PLMN information of the first subscriber identity module 420 from the shared memory (e.g., the memory 450). According to an embodiment, the second communication protocol stack 802 may obtain the PLMN information of the first subscriber identity module 420 from the first subscriber identity module 420. According to an embodiment, when it is determined that the PLMN information of the first subscriber identity module 420 may be used, the second communication protocol stack 802 may determine that the PLMN information of the first subscriber identity module 420 may be used for wireless communication using the second subscriber identity module 430.

According to various embodiments, the second communication protocol stack 802 may perform a network search, based on PLMN sharing information (e.g., the PLMN information of the first subscriber identity module 420) (operation 829). According to an embodiment, the second communication protocol stack 802 may perform a network search, based on the PLMN information of the first subscriber identity module 420. The second communication protocol stack 802 may first identify whether the first network 810 corresponding to the PLMN information of the first subscriber identity module 420 exists through network search.

According to various embodiments, when the first network 810 corresponding to the PLMN information of the first subscriber identity module 420 is searched, the second communication protocol stack 802 may transmit a registration request message to the first network 810 (operation 831). For example, the registration request message may include second subscriber identity information of the second subscriber identity module 430.

According to various embodiments, when accepting registration of the electronic device (e.g., the electronic device 400 of FIG. 4) based on the second subscriber identity information, the first network 810 may transmit a registration acceptance message to the electronic device (e.g., the electronic device 400 of FIG. 4) (operation 833).

According to various embodiments, when the registration acceptance message is received from the first network 810, the second communication protocol stack 802 may determine that registration to the first network 810 is completed based on the second subscriber identity information.

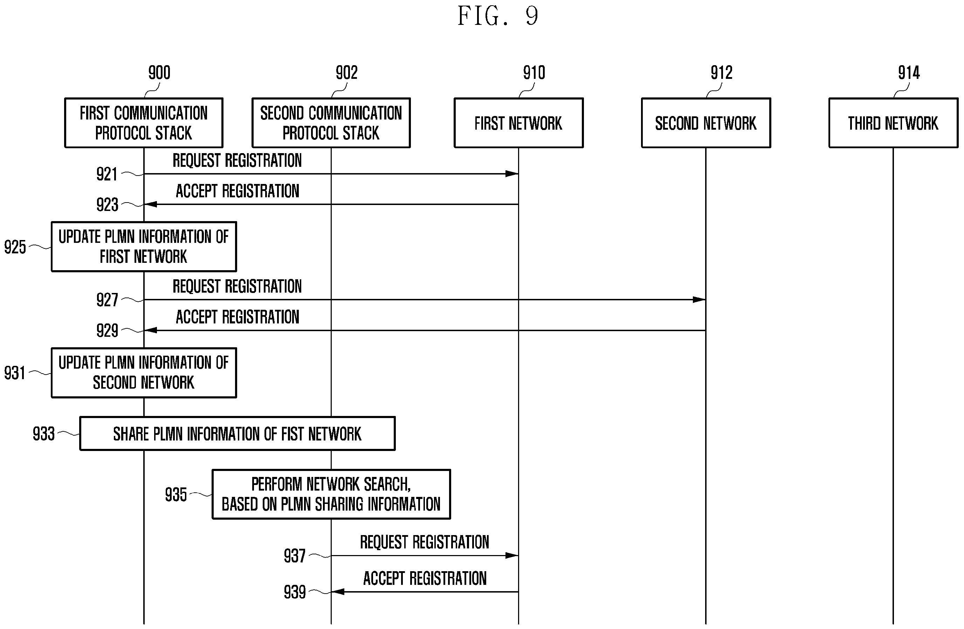

FIG. 9 is another example for sharing PLMN information between subscriber identity modules in an electronic device according to various embodiments.

According to various embodiments of the present disclosure referring to FIG. 9, a first communication protocol stack 900 corresponding to the first subscriber identity module 420 in the electronic device (e.g., the electronic device 400 of FIG. 4) may transmit a registration request message to a first network 810 (operation 921). According to an embodiment, the first communication protocol stack 900 may perform a network search for the first subscriber identity module 420. When a first network 910 of a first wireless communication (e.g., LTE) is searched through the network search, the first communication protocol stack 900 may transmit the registration request message including the first subscriber identity information of the first subscriber identity module 420 to the first network 910.

According to various embodiments, when accepting registration of the electronic device (e.g., the electronic device 400 of FIG. 4) based on the first subscriber identity information, the first network 910 may transmit a registration acceptance message to the electronic device (e.g., the electronic device 400 of FIG. 4) (operation 923).

According to various embodiments, when receiving the registration acceptance message from the first network 910, the first communication protocol stack 900 may determine that registration to the first network 910 is completed based on the first subscriber identity information. The first communication protocol stack 900 may update (or generate) PLMN information of the first subscriber identity module 420, based on the PLMN information of the first network 910 registered based on the first subscriber identity information (operation 925). According to an embodiment, the first communication protocol stack 900 may add PLMN information of the first network 910 related to the first wireless communication to the first network configuration information of the first subscriber identity module 420. For example, the first network configuration information of the first subscriber identity module 420 may be stored in a shared memory and/or the first subscriber identity module 420. For example, when the first network 910 is an LTE network, the first subscriber identity module 420 may update the value of the EF_EPSLOCI field with PLMN information of the first network 810.

According to various embodiments, when a second network 912 of a second wireless communication (e.g., NR) is searched through a network search, the first communication protocol stack 900 may transmit a registration request message to the second network 912 (operation 927). According to an embodiment, when not registered to a top network (or preferred network) included in the preferred PLMN list, the first communication protocol stack 900 may periodically search a network for the first subscriber identity module 420. When the second network 912 of the second wireless communication (e.g., NR) is searched through the network search, the first communication protocol stack 900 may transmit the registration request message including the first subscriber identity information of the first subscriber identity module 420 to the second network 912.

According to various embodiments, when accepting registration of the electronic device (e.g., the electronic device 400 of FIG. 4) based on the first subscriber identity information, the second network 912 may transmit a registration acceptance message to the electronic device (e.g., the electronic device 400 of FIG. 4) (operation 929).

According to various embodiments, when receiving the registration acceptance message from the second network 912, the first communication protocol stack 900 may determine that registration to the second network 912 based on the first subscriber identity information is completed. The first communication protocol stack 900 may update (or generate) the PLMN information of the first subscriber identity module 420, based on the PLMN information of the second network 912 registered based on the first subscriber identity information (operation 931). According to an embodiment, the first communication protocol stack 900 may add PLMN information of the second network 912 related to the second wireless communication to the first network configuration information of the first subscriber identity module 420. For example, the PLMN information of the second network 912 may be added (or stored) to be distinguished from the PLMN information of the first network 910. For example, when the second network 912 is an NR network, the first subscriber identity module 420 may update the value of the EF_5GS3GPPLOCI field with the PLMN information of the second network 912.

According to various embodiments, a second communication protocol stack 902 corresponding to the second subscriber identity module 430 in the electronic device (e.g., the electronic device 400 of FIG. 4) may identify whether PLMN information of the first subscriber identity module 420 may be used for wireless communication based on the second subscriber identity module 430. According to an embodiment, when supporting the LTE network by using the second subscriber identity module 430, the second communication protocol stack 902 may identify whether the PLMN information of the first network 910 stored in the first subscriber identity module 420 may be used. For example, when the PLMN information of the first network 910 corresponds to location information (e.g., a country) of the electronic device 101, registration to the first network 910 is completed by using the first subscriber identity module 420, and the PLMNs of the first subscriber identity module 420 and the second subscriber identity module 430 are different, the second communication protocol stack 902 may determine that the PLMN information of the first network 910 stored in the first subscriber identity module 420 may be used.

According to various embodiments, when it is determined that the PLMN information of the first network 910 stored in the first subscriber identity module 420 may be used, the second communication protocol stack 902 may share the PLMN information of the first network 910 stored in the first subscriber identity module 420 (operation 933). According to an embodiment, the second communication protocol stack 902 may obtain the PLMN information related to the LTE network (e.g., the first network 910) among the PLMN information of the first subscriber identity module 420 from the shared memory (e.g., the memory 450). According to an embodiment, the second communication protocol stack 902 may obtain the PLMN information related to the LTE network (e.g., the first network 910) among the PLMN information of the first subscriber identity module 420 from the first subscriber identity module 420. For example, when it is determined that the PLMN information of the first network 910 stored in the first subscriber identity module 420 may be used, the second communication protocol stack 902 may determine that the PLMN information of the first network 910 may be used for wireless communication using the second subscriber identity module 430.

According to various embodiments, the second communication protocol stack 902 may perform a network search, based on PLMN sharing information (e.g., the PLMN information of the first network 910) (operation 935). According to an embodiment, the second communication protocol stack 902 may perform a network search for the second subscriber identity module 430, based on the PLMN information of the first subscriber identity module 420. The second communication protocol stack 902 may first identify whether the first network 910 corresponding to the PLMN information of the first subscriber identity module 420 exists through network search.

According to various embodiments, when the first network 910 corresponding to the PLMN information of the first subscriber identity module 420 is searched, the second communication protocol stack 902 may transmit a registration request message to the first network 910 (operation 937). For example, the registration request message may include second subscriber identity information of the second subscriber identity module 430.

According to various embodiments, when accepting registration of the electronic device (e.g., the electronic device 400 of FIG. 4) based on the second subscriber identity information, the first network 910 may transmit a registration acceptance message to the electronic device (e.g., the electronic device 400 of FIG. 4) (operation 939).

According to various embodiments, when the registration acceptance message is received from the first network 910, the second communication protocol stack 902 may determine that registration to the first network 910 is completed based on the second subscriber identity information.

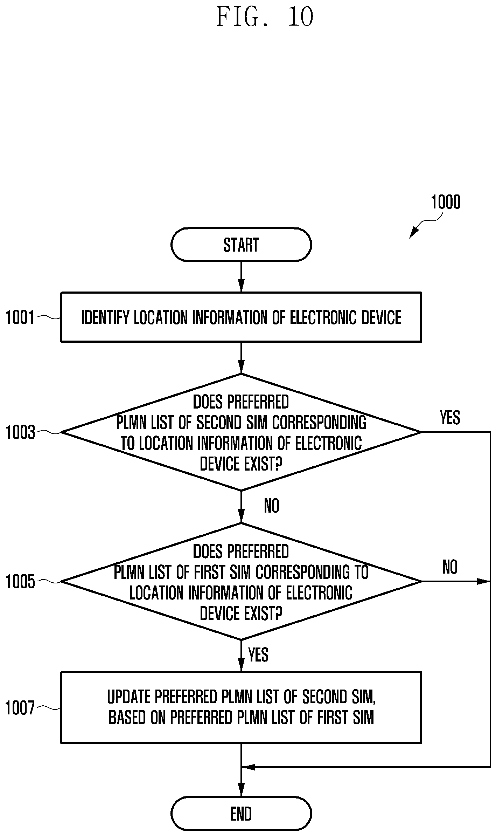

FIG. 10 is an example of a flowchart 1000 for updating a preferred PLMN list of a second subscriber identity module, based on a preferred PLMN list of a first subscriber identity module in an electronic device according to various embodiments. According to an embodiment, the operations of FIG. 10 may be a detailed operation of operation 503 of FIG. 5. In the following embodiment, operations may be performed sequentially, but are not necessarily performed sequentially. For example, the order of operations may be changed, and at least two operations may be performed in parallel. As an example, the electronic device of FIG. 10 may be the electronic device 101 of FIG. 1, FIG. 2, or FIG. 3 or the electronic device 400 of FIG. 4.

According to various embodiments of the present disclosure referring to FIG. 10, when the electronic device (e.g., the processor 120 of FIG. 1 or the processor 410 of FIG. 4) is registered to the first network based on the first subscriber identity information of the first subscriber identity module 420 (e.g., operation 501 of FIG. 5), in operation 1001, the electronic device may identify the location information of the electronic device. According to an embodiment, the processor 410 (e.g., the second communication protocol stack) may determine the country in which the electronic device 400 is located. For example, the processor 410 (e.g., the second communication protocol stack) may determine the location (e.g., a country) of the electronic device 400, based on at least one of mobile country code (MCC), global navigation satellite system (GNSS), phone number, carrier portability code (CPC), international mobile equipment identity (IMEI), international mobile subscriber identity (IMSI), mobile network code (MNC), wireless fidelity (Wi-Fi), or a data network (e.g., an IP address).

According to various embodiments, in operation 1003, the electronic device (e.g., the processor 120 or 410) may identify whether a preferred PLMN list corresponding to location information (e.g., a country) of the electronic device exists in the second subscriber identity module 430.

According to various embodiments, when the preferred PLMN list corresponding to the location information (e.g., a country) of the electronic device exists in the second subscriber identity module 430 (e.g., 'Yes' in operation 1003), the electronic device (e.g., the processor 120 or 410) may terminate an embodiment for updating the preferred PLMN list of the second subscriber identity module. According to an embodiment, when the preferred PLMN list corresponding to the location information (e.g., a country) of the electronic device exists in the second subscriber identity module 430, the processor 410 (e.g., the second communication protocol stack) may first identify whether a network corresponding to the PLMN information included in the preferred PLMN list of the second subscriber identity module 430 exists through network search.

According to various embodiments, when the preferred PLMN list corresponding to the location information (e.g., a country) of the electronic device does not exist in the second subscriber identity module 430 (e.g., 'No' in operation 1003), in operation1005, the electronic device (e.g., the processor 120 or 410) may identify whether the preferred PLMN list corresponding to location information (e.g., a country) of the electronic device exists in the first subscriber identity module 420.

According to various embodiments, when the preferred PLMN list corresponding to the location information (e.g., a country) of the electronic device does not exist in the first subscriber identity module 420 (e.g., 'No' in operation 1005), the electronic device (e.g., the processor 120 or 410) may terminate an embodiment for updating the preferred PLMN list of the second subscriber identity module.

According to various embodiments, when the preferred PLMN list corresponding to the location information (e.g., a country) of the electronic device exists in the first subscriber identity module 420 (e.g., 'Yes' in operation 1005), in operation1007, the electronic device (e.g., the processor 120 or 410) may update the preferred PLMN list of the second subscriber identity module 430, based on the preferred PLMN list of the first subscriber identity module 420. According to an embodiment, the processor 410 (e.g., the second communication protocol stack) may generate the preferred PLMN list of the second subscriber identity module 430, based on the preferred PLMN list of the first subscriber identity module 420. For example, the processor 410 (e.g., the second communication protocol stack) may add the preferred PLMN list of the first subscriber identity module 420 to the preferred PLMN list of the second subscriber identity module 430.

According to various embodiments, when the preferred PLMN list of the second subscriber identity module 430 is updated based on the preferred PLMN list of the first subscriber identity module 420, the electronic device 400 may perform a network search based on the updated preferred PLMN list of the second subscriber identity module 430. According to an embodiment, the processor 410 (e.g., the second communication protocol stack) may first identify whether a network corresponding to the PLMN information included in the updated preferred PLMN list of the second subscriber identity module 430 exists through network search.

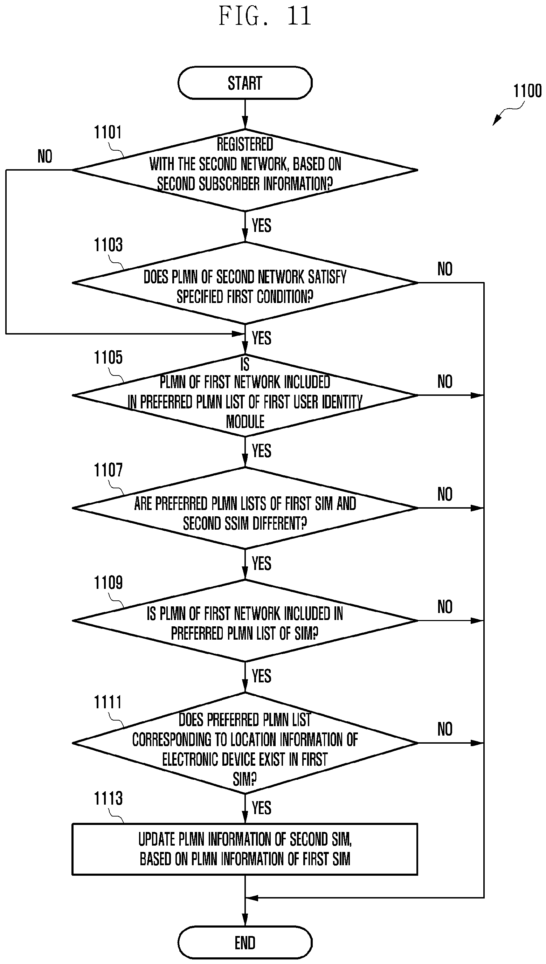

FIG. 11 is another example of a flowchart 1100 for updating a preferred PLMN list of a second subscriber identity module, based on a preferred PLMN list of a first subscriber identity module in an electronic device according to various embodiments. According to an embodiment, the operations of FIG. 11 may be a detailed operation of operation 503 of FIG. 5. In the following embodiment, operations may be performed sequentially, but are not necessarily performed sequentially. For example, the order of operations may be changed, and at least two operations may be performed in parallel. As an example, the electronic device of FIG. 11 may be the electronic device 101 of FIG. 1, FIG. 2, or FIG. 3 or the electronic device 400 of FIG. 4.

According to various embodiments of the present disclosure referring to FIG. 11, when the electronic device (e.g., the processor 120 of FIG. 1 or the processor 410 of FIG. 4) is registered to the first network based on the first subscriber identity information of the first subscriber identity module 420 (e.g., operation 501 of FIG. 5), in operation 1101, the electronic device may identify whether the electronic device is registered to the second network based on the second subscriber identity information of the second subscriber identity module 430. According to an embodiment, the processor 410 (e.g., the second communication protocol stack) may control the wireless communication circuit 440 to transmit a registration request message including second subscriber identity information to the second network detected through a network search. When a registration acceptance message is received from the second network in response to the registration request message, the processor 410 (e.g., the second communication protocol stack) may determine that registration to the second network based on the second subscriber identity information is completed.

According to various embodiments, when registered to the second network based on the second subscriber identity information (e.g., 'Yes' in operation 1101), in operation 1103, the electronic device (e.g., the processor 120 or 410) may identify whether the PLMN of the second network satisfies a specified first condition. According to an embodiment, the processor 410 (e.g., the second communication protocol stack) may receive PLMN information from the second network when registered to the second network. For example, when the PLMN information of the second network registered by using the second subscriber identity module 430 is not a top network in the preferred PLMN list of the second subscriber identity module 430, the processor 410 (e.g., the second communication protocol stack) may determine that the specified first condition is satisfied. For another example, when the PLMN information of the second network registered by using the second subscriber identity module 430 is a top network in the preferred PLMN list of the second subscriber identity module 430, the processor 410 (e.g., the second communication protocol stack) may determine that the specified first condition is not satisfied.

According to various embodiments, when not registered to the second network based on the second subscriber identity information (e.g., 'No' in operation 1101) or when the PLMN of the second network satisfies the specified first condition (e.g., 'Yes' in operation 1103), in operation 1105, the electronic device (e.g., the processor 120 or 410) may use the first user identity module 420 to identify whether the registered PLMN of the first network is included in the preferred PLMN list of the first user identity module 420.

According to various embodiments, when the PLMN of the first network registered using the first user identity module 420 is included in the preferred PLMN list of the first user identity module 420 (e.g., 'Yes' in operation 1105), in operation 1107, the electronic device (e.g., the processor 120 or 410) may identify whether the preferred PLMN lists of the first subscriber identity module 420 and the second subscriber identity module 430 are different.

According to various embodiments, when the preferred PLMN lists of the first subscriber identity module 420 and the second subscriber identity module 430 are different (e.g., 'Yes' in operation 1107), in operation 1109, the electronic device (e.g., the processor 120 or 410) may identify whether the PLMN of the first network registered using the first user identity module 420 is included in the preferred PLMN list of the second user identity module 430.

According to various embodiments, when the PLMN of the first network registered using the first user identity module 420 is not included in the preferred PLMN list of the second user identity module 430 (e.g., 'No' in operation 1109), in operation 1111, the electronic device (e.g., the processor 120 or 410) may identify whether the preferred PLMN list of the first subscriber identity module 420 corresponds to the location of the electronic device 400. According to an embodiment, the processor 410 (e.g., the second communication protocol stack) may identify whether the PLMN information of the first subscriber identity module 420 corresponds to the location of the electronic device 400. For example, the location of the electronic device 400 may include country information in which the electronic device 400 is located. For example, the country information in which the electronic device 400 is located may be determined through a part of PLMN information (e.g., an MCC value) obtained when the electronic device 400 searches for a network.

According to various embodiments, when the preferred PLMN list of the first subscriber identity module 420 corresponds to the location of the electronic device 400 (e.g., 'Yes' in operation 1111), in operation 1113, the electronic device (e.g., the processor 120 or 410) may update the preferred PLMN list of the second subscriber identity module 430 based on the preferred PLMN list of the first subscriber identity module 420. According to an embodiment, the processor 410 (e.g., the second communication protocol stack) may add the preferred PLMN list of the first subscriber identity module 420 to the preferred PLMN list of the second subscriber identity module 430.

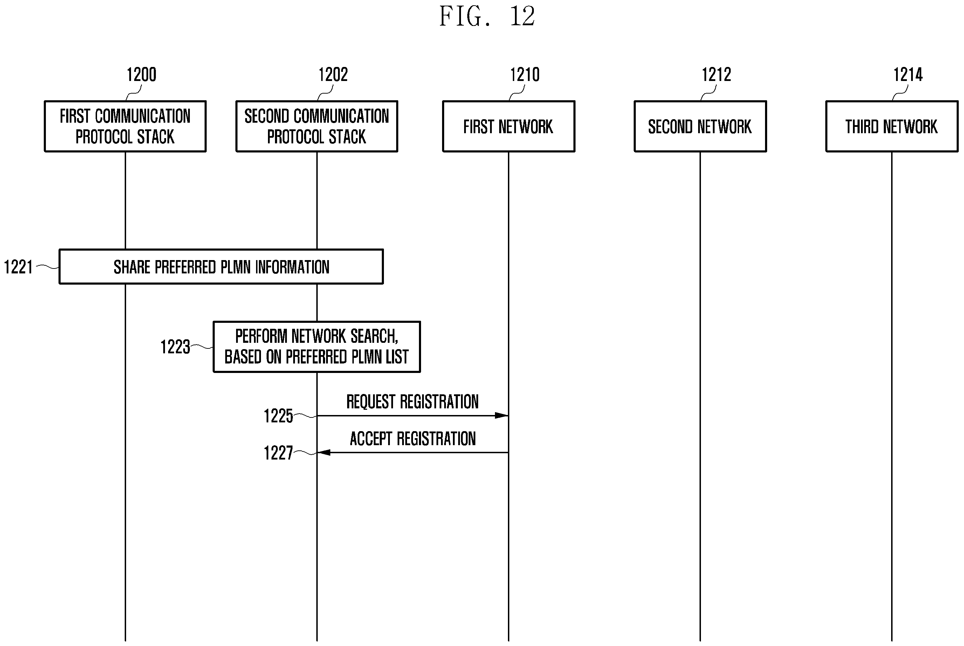

FIG. 12 is an example of performing a network search for a second subscriber identity module by referring to a preferred PLMN list of a first subscriber identity module in an electronic device according to various embodiments.

According to various embodiments of the present disclosure with reference to FIG. 12, a second communication protocol stack 1202 corresponding to the second subscriber identity module 430 in an electronic device (e.g., the electronic device 400 of FIG. 4) may identify whether the preferred PLMN list of the first subscriber identity module 420 may be used for wireless communication based on the second subscriber identity module 430. According to an embodiment, the second communication protocol stack 1202 may obtain the preferred PLMN list of the first subscriber identity module 420 from the shared memory. According to an embodiment, the second communication protocol stack 1202 may obtain the preferred PLMN list stored in the first subscriber identity module 420. According to an embodiment, when the preferred PLMN list of the first subscriber identity module 420 is obtained, the second communication protocol stack 1202 may identify whether the preferred PLMN list of the first subscriber identity module 420 may be used for wireless communication based on the second subscriber identity module 430. For example, when the preferred PLMN list of the first subscriber identity module 420 corresponds to location information (e.g., a country) of the electronic device 101, and the preferred PLMN lists of the first subscriber identity module 420 and the second subscriber identity module 430 are different, the second communication protocol stack 1202 may determine that the preferred PLMN list of the first subscriber identity list 420 may be used for wireless communication using the second subscriber identity module 430.

According to various embodiments, when it is determined that the preferred PLMN list of the first subscriber identity module 420 may be used, the second communication protocol stack 1202 may share the preferred PLMN list of the first subscriber identity module 420 (operation 1221). According to an embodiment, when the preferred PLMN list does not exist in the second subscriber identity module 430, the second communication protocol stack 1202 may determine whether the preferred PLMN list of the first subscriber identity module 420 may be used. When it is determined that the preferred PLMN list of the first subscriber identity module 420 may be used, the second communication protocol stack 1202 may update (or generate) the preferred PLMN list of the second subscriber identity module 430, based on the preferred PLMN list of the first subscriber identity module 420.

According to various embodiments, the second communication protocol stack 1202 may perform a network search based on sharing information of the preferred PLMN list (operation 1223). According to an embodiment, the second communication protocol stack 1202 may perform a network search based on the preferred PLMN list of the second subscriber identity module 430 updated (or generated) based on the preferred PLMN list of the first subscriber identity module 420. The second communication protocol stack 1202 may first identify whether a network included in the preferred PLMN list of the second subscriber identity module 430 exists through a network search.

According to various embodiments, when the first network 1210 included in the preferred PLMN list of the second subscriber identity module 430 is searched, the second communication protocol stack 1202 may transmit a registration request message to the first network 1210 (operation 1225). For example, the registration request message may include second subscriber identity information of the second subscriber identity module 430.

According to various embodiments, when accepting registration of the electronic device (e.g., the electronic device 400 of FIG. 4) based on the second subscriber identity information, the first network 1210 may transmit a registration acceptance message to the electronic device (e.g., the electronic device 400 of FIG. 4) (operation 1227).

According to various embodiments, when receiving the registration acceptance message from the first network 1210, the second communication protocol stack 1202 may determine that registration to the first network 1210 is completed based on the second subscriber identity information.

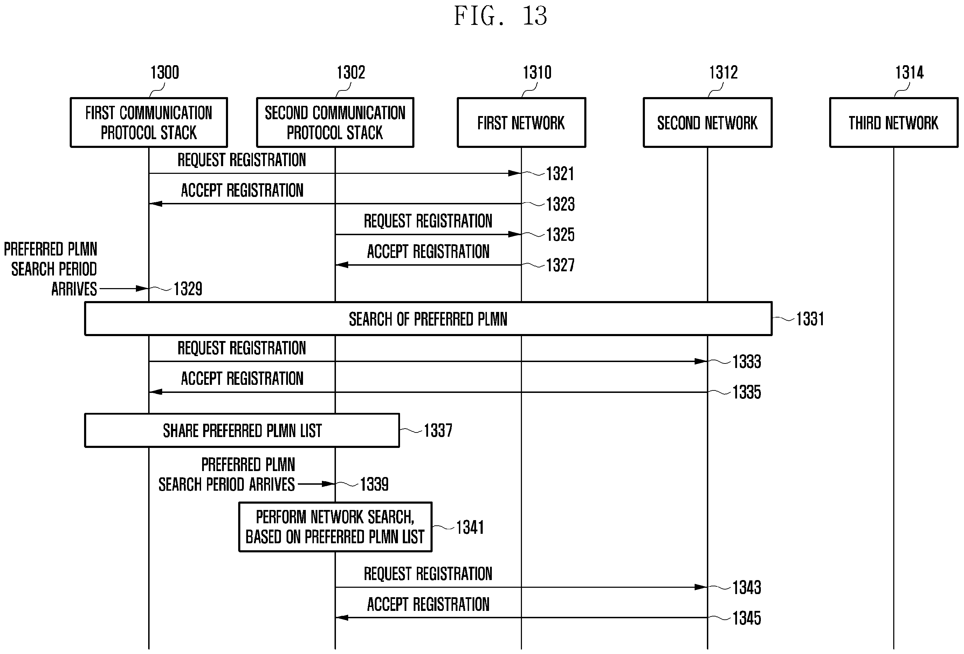

FIG. 13 is another example of performing a network search for a second subscriber identity module by referring to a preferred PLMN list of a first subscriber identity module in an electronic device according to various embodiments.

According to various embodiments of the disclosure referring to FIG. 13, a first communication protocol stack 1300 corresponding to the first subscriber identity module 420 in the electronic device (e.g., the electronic device 400 of FIG. 4) may transmit a registration request message based on the network search result to a first network 1310 (operation 1321). For example, the registration request message may include first subscriber identity information of the first subscriber identity module 420.

According to various embodiments, when accepting registration of the electronic device (e.g., the electronic device 400 of FIG. 4) based on the first subscriber identity information, the first network 1310 may transmit a registration acceptance message to the electronic device (e.g., the electronic device 400 of FIG. 4) (operation 1323).

According to various embodiments, when receiving the registration acceptance message from the first network 1310, the first communication protocol stack 1300 may determine that registration to the first network 1310 is completed based on the first subscriber identity information.

According to various embodiments, a second communication protocol stack 1302 corresponding to the second subscriber identity module 430 in the electronic device (e.g., the electronic device 400 of FIG. 4) may transmit a registration request message to the first network 1310 based on the network search result (operation 1325). For example, the registration request message may include second subscriber identity information of the second subscriber identity module 430.

According to various embodiments, when accepting registration of the electronic device (e.g., the electronic device 400 of FIG. 4) based on the second subscriber identity information, the first network 1310 may transmit a registration acceptance message to the electronic device (e.g., the electronic device 400 of FIG. 4) (operation 1327).

According to various embodiments, when receiving the registration acceptance message from the first network 1310, the second communication protocol stack 1302 may determine that registration to the first network 1310 is completed based on the second subscriber identity information.

According to various embodiments, when the first network 1310 is not the top network in the preferred PLMN list of the first subscriber identity module 420, the first communication protocol stack 1300 may periodically perform a network search to identify whether the top network in the preferred PLMN list exists (operations 1329 and 1331). According an embodiment, when the first network 1310 is not the top network in the preferred PLMN list of the first subscriber identity module 420, the first communication protocol stack 1300 may identify whether the preferred PLMN search period arrives. When the preferred PLMN search period arrives (operation 1329), the first communication protocol stack 1300 may identify whether the top network in the preferred PLMN list exists through a network search (operation 1331).

According to various embodiments, when the second network 1312, which is the top network in the preferred PLMN list of the first subscriber identity module 420, is searched through the network search, the first communication protocol stack 1300 may transmit a registration request message to the second network 1312 (operation 1333). For example, the registration request message may include first subscriber identity information of the first subscriber identity module 420.

According to various embodiments, when accepting registration of the electronic device (e.g., the electronic device 400 of FIG. 4) based on the first subscriber identity information, the second network 1312 may transmit a registration acceptance message to the electronic device (e.g., the electronic device 400 of FIG. 4) (operation 1335).

According to various embodiments, when receiving the registration acceptance message from the second network 1312, the first communication protocol stack 1300 may determine that registration to the second network 1312 based on the first subscriber identity information is completed.

According to various embodiments, the second communication protocol stack 1302 may identify whether the preferred PLMN list of the first subscriber identity module 420 may be used. According to an embodiment, when the first network 1310 is not the top network in the preferred PLMN list of the second subscriber identity module 430, the second communication protocol stack 1302 may periodically perform a network search to identify whether the top network in the preferred PLMN list exists. The second communication protocol stack 1302 may identify whether the preferred PLMN list of the first subscriber identity module 420 may be used to identify whether the top network in the preferred PLMN list exists. For example, when the second network 1312 is included in the preferred PLMN list of the first subscriber identity module 420, the second network 1312 is not included in the preferred PLMN list of the second subscriber identity module 430, the preferred PLMN list of the first subscriber identity module 420 corresponds to location information (e.g., a country) of the electronic device 101, and the preferred PLMN lists of the first subscriber identity module 420 and the second subscriber identity module 430 are different, the second communication protocol stack 1302 may determine that the preferred PLMN list of the first subscriber identity list 420 may be used.

According to an embodiment, when it is determined that the preferred PLMN list of the first subscriber identity module 420 may be used, the second communication protocol stack 1302 may share the preferred PLMN list of the first subscriber identity module 420 (operation 1337). For example, when it is determined that the preferred PLMN list of the first subscriber identity module 420 may be used, the second communication protocol stack 1302 may add PLMN information included in the preferred PLMN list of the first subscriber identity module 420 to the preferred PLMN list of the second subscriber identity module 430. For example, the preferred PLMN list of the first subscriber identity module 420 may be obtained from a shared memory and/or the first subscriber identity module 420.

According to various embodiments, when the preferred PLMN search period arrives (operation 1339), the second communication protocol stack 1302 may perform a network search based on sharing information of the preferred PLMN list (operation 1341). According to an embodiment, the second communication protocol stack 1302 may perform a network search based on the preferred PLMN list of the second subscriber identity module 430 updated based on the preferred PLMN list of the first subscriber identity module 420. The second communication protocol stack 1302 may first identify whether a network included in the preferred PLMN list of the second subscriber identity module 430 exists through a network search.

According to various embodiments, when the second network 1312 included in the preferred PLMN list of the second subscriber identity module 430 is searched, the second communication protocol stack 1302 may transmit a registration request message to the second network 1312 (operation 1343). For example, the registration request message may include second subscriber identity information of the second subscriber identity module 430.

According to various embodiments, when accepting registration of the electronic device (e.g., the electronic device 400 of FIG. 4) based on the second subscriber identity information, the second network 1312 may transmit a registration acceptance message to the electronic device (e.g., the electronic device 400 of FIG. 4) (operation 1345).

According to various embodiments, when receiving the registration acceptance message from the second network 1312, the second communication protocol stack 1302 may determine that registration to the second network 1312 is completed based on the second subscriber identity information.

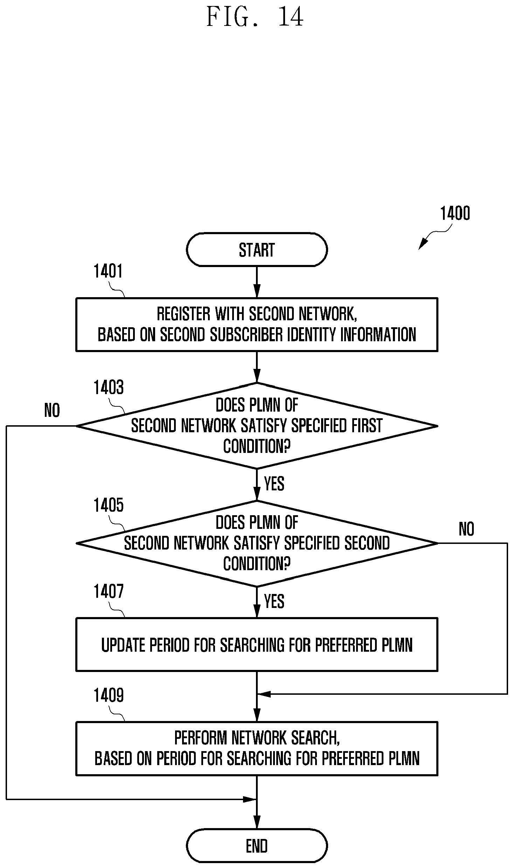

FIG. 14 is a flowchart 1400 for updating a network search period for a second subscriber identity module by referring to a preferred PLMN list of a first subscriber identity module in an electronic device according to various embodiments. According to an embodiment, the operations of FIG. 14 may be a detailed operation of operation 505 of FIG. 5. In the following embodiment, operations may be performed sequentially, but are not necessarily performed sequentially. For example, the order of operations may be changed, and at least two operations may be performed in parallel. As an example, the electronic device of FIG. 14 may be the electronic device 101 of FIG. 1, FIG. 2, or FIG. 3 or the electronic device 400 of FIG. 4.

According to various embodiments of the disclosure with reference to FIG. 14, in operation 1401, the electronic device (e.g., the processor 120 of FIG. 1 or the processor 410 of FIG. 4) may make a registration to the second network based on the second subscriber identity information of the second subscriber identity module 430. According to an embodiment, the processor 410 (e.g., the second communication protocol stack) may control the wireless communication circuit 440 to transmit a registration request message including second subscriber identity information to the second network detected through a network search. When receiving a registration acceptance message from the second network in response to the registration request message, the processor 410 (e.g., the second communication protocol stack) may determine that registration to the second network based on the second subscriber identity information is completed.

According to various embodiments, in operation 1403, the electronic device (e.g., the processor 120 or 410) may identify whether the PLMN of the second network satisfies a specified first condition. According to an embodiment, the processor 410 (e.g., the second communication protocol stack) may receive PLMN information from the second network when registered to the second network. When the PLMN information of the second network registered by using the second subscriber identity module 430 is not a top network in the preferred PLMN list of the second subscriber identity module 430, the processor 410 (e.g., the second communication protocol stack) may determine that the specified first condition is satisfied. For another example, when the PLMN information of the second network registered by using the second subscriber identity module 430 is a top network in the preferred PLMN list of the second subscriber identity module 430, the processor 410 (e.g., the second communication protocol stack) may determine that the specified first condition is not satisfied.

According to various embodiments, when the PLMN of the second network does not satisfy the specified first condition (e.g., 'No' in operation 1403), the electronic device (e.g., the processor 120 or 410) may terminate an embodiment for updating the network search period for the second subscriber identity module. According to an embodiment, when the electronic device 400 is registered to the top network in the preferred PLMN list of the second subscriber identity module 430, the processor 410 (e.g., the second communication protocol stack) may determine that the network search for searching for the top network in the preferred PLMN list is completed. Accordingly, the processor 410 (e.g., the second communication protocol stack) may terminate the embodiment for updating the network search period for the second subscriber identity module.

According to various embodiments, when the PLMN of the second network satisfies the specified first condition (e.g., 'YES' in operation 1403), in operation 1405, the electronic device (e.g., the processor 120 or 410) may identify whether the PLMN of the second network satisfies the specified second condition. According to an embodiment, when the PLMN information of the second network registered by using the second subscriber identity module 430 is the top network in the preferred PLMN list of the first subscriber identity module 420, the processor 410 (e.g., the second communication protocol stack) may determine that the specified second condition is satisfied. According to an embodiment, when the PLMN information of the second network registered by using the second subscriber identity module 430 is not the top network in the preferred PLMN list of the first subscriber identity module 420, the processor 410 (e.g., the second communication protocol stack) may determine that the specified second condition is not satisfied.

According to various embodiments, when the PLMN of the second network satisfies the specified second condition (e.g., 'yes' in operation 1405), in operation 1407, the electronic device (e.g., the processor 120 or 410) may update a period for searching for a network in the preferred PLMN list. According to an embodiment, the processor 410 (e.g., the second communication protocol stack) may extend the period of the preferred PLMN list by a specified magnification (e.g., an integer multiple) so as not to exceed the maximum period.

According to various embodiments, when the PLMN of the second network does not satisfy the second specified condition (e.g., 'No' in operation 1405) or a period for searching for a network in the preferred PLMN list is updated (e.g., operation 1407), the electronic device (e.g., the processor 120 or 410) may perform a network search, based on a period for searching for a network in the preferred PLMN list. According to an embodiment, the processor 410 (e.g., the second communication protocol stack) may first identify whether a network corresponding to the PLMN information included in the preferred PLMN list of the first subscriber identity module 420 exists through network search. For example, when a network included in the preferred PLMN list of the first subscriber identity module 420 is searched, the processor 410 (e.g., the second communication protocol stack) may perform a registration process with the searched network, based on the second subscriber identity information.

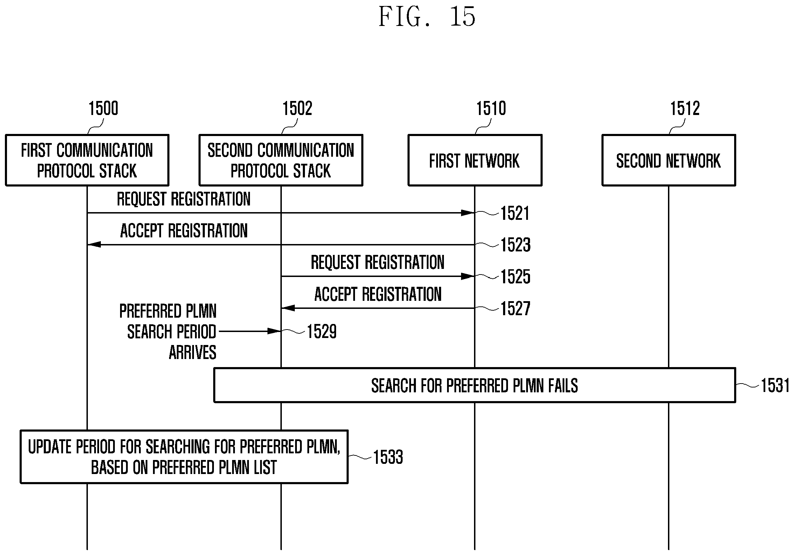

FIG. 15 is an example for updating a network search period for a second subscriber identity module by referring to a preferred PLMN list of a first subscriber identity module in an electronic device according to various embodiments.

According to various embodiments of the disclosure referring to FIG. 15, a first communication protocol stack 1500 corresponding to the first subscriber identity module 420 in the electronic device (e.g., the electronic device 400 of FIG. 4) may transmit a registration request message based on the network search result to a first network 1510 (operation 1521). For example, the registration request message may include first subscriber identity information of the first subscriber identity module 420.

According to various embodiments, when accepting registration of the electronic device (e.g., the electronic device 400 of FIG. 4) based on the first subscriber identity information, the first network 1510 may transmit a registration acceptance message to the electronic device (e.g., the electronic device 400 of FIG. 4) (operation 1523).

According to various embodiments, when receiving the registration acceptance message from the first network 1510, the first communication protocol stack 1500 may determine that registration to the first network 1510 is completed based on the first subscriber identity information.

According to various embodiments, a second communication protocol stack 1502 corresponding to the second subscriber identity module 430 in the electronic device (e.g., the electronic device 400 of FIG. 4) may transmit a registration request message to the first network 1510 based on the network search result (operation 1525). For example, the registration request message may include second subscriber identity information of the second subscriber identity module 430.

According to various embodiments, when accepting registration of the electronic device (e.g., the electronic device 400 of FIG. 4) based on the second subscriber identity information, the first network 1510 may transmit a registration acceptance message to the electronic device (e.g., the electronic device 400 of FIG. 4) (operation 1527).

According to various embodiments, when receiving the registration acceptance message from the first network 1510, the second communication protocol stack 1502 may determine that registration to the first network 1510 is completed based on the second subscriber identity information.

According to various embodiments, when the first network 1510 is not the top network in the preferred PLMN list of the second subscriber identity module 430, the second communication protocol stack 1502 may periodically perform a network search to identify whether the top network in the preferred PLMN list exists (operations 1529 and 1531). According an embodiment, when the first network 1510 is not the top network in the preferred PLMN list of the second subscriber identity module 430, the second communication protocol stack 1502 may identify whether the preferred PLMN search period arrives. When the preferred PLMN search period arrives (operation 1529), the second communication protocol stack 1502 may identify whether the top network in the preferred PLMN list exists through a network search (operation 1531).

According to various embodiments, when the top network in the preferred PLMN list of the first subscriber identity module 420 is not searched through the network search (operation 1531), the second communication protocol stack 1502 may identify whether the preferred PLMN list of the first subscriber identity module 420 may be used. According to an embodiment, when it is determined that the preferred PLMN list of the first subscriber identification module 420 may be used, the second communication protocol stack 1502 may update a period for searching for a network in the preferred PLMN list of the second subscriber identification module 430 (operation 1533). For example, when the first network 1510 is not the top network in the preferred PLMN list of the second subscriber identity module 430 and the first network 1510 is the top network in the preferred PLMN list of the first subscriber identity module 420, the second communication protocol stack 1502 may determine that the preferred PLMN list of the first subscriber identity module 420 may be used. According to an embodiment, the processor 410 (e.g., the second communication protocol stack) may extend the period of the preferred PLMN list by a specified magnification (e.g., an integer multiple) so as not to exceed the maximum period.

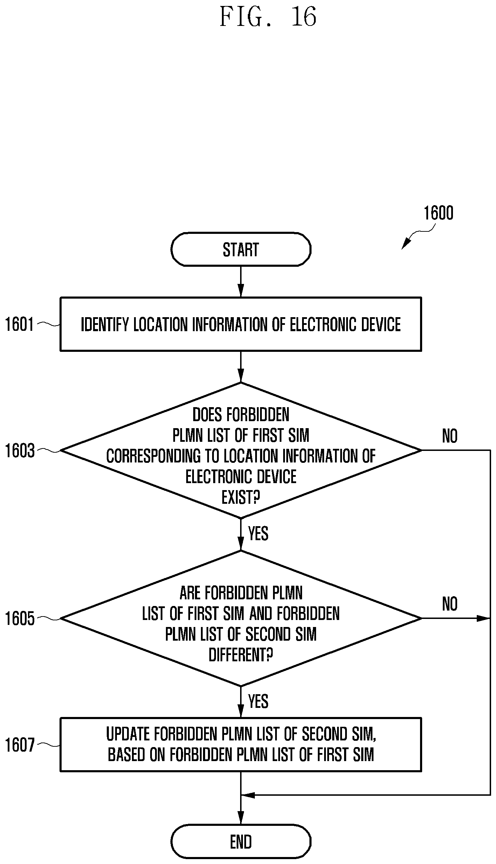

FIG. 16 is a flowchart 1600 for updating a forbidden PLMN list of a second subscriber identity module, based on a forbidden PLMN list of a first subscriber identity module in an electronic device according to various embodiments. According to an embodiment, the operations of FIG. 16 may be a detailed operation of operation 503 of FIG. 5. In the following embodiment, operations may be performed sequentially, but are not necessarily performed sequentially. For example, the order of operations may be changed, and at least two operations may be performed in parallel. As an example, the electronic device of FIG. 16 may be the electronic device 101 of FIG. 1, FIG. 2, or FIG. 3 or the electronic device 400 of FIG. 4.

According to various embodiments of the disclosure referring to FIG. 16, when the electronic device (e.g., the processor 120 of FIG. 1 or the processor 410 of FIG. 4) is registered to the first network based on the first subscriber identity information of the first subscriber identity module 420 (e.g., operation 501 of FIG. 5), in operation 1601, the electronic device may identify the location information of the electronic device. According to an embodiment, the processor 410 (e.g., the second communication protocol stack) may determine the country in which the electronic device 400 is located. For example, the processor 410 (e.g., the second communication protocol stack) may determine the location (e.g., a country) of the electronic device 400, based on at least one of MCC, global navigation satellite system (GNSS), phone number, carrier portability code (CPC), IMEI, IMSI, MNC, Wi-Fi, or a data network (e.g., an IP address).

According to various embodiments, in operation 1603, the electronic device (e.g., the processor 120 or 410) may identify whether a forbidden PLMN list corresponding to location information (e.g., a country) of the electronic device exists in the first subscriber identity module 420.

According to various embodiments, when a forbidden PLMN list corresponding to the location information (e.g., a country) of the electronic device exists in the first subscriber identity module 430 (e.g., 'Yes' in operation 1603), in operation 1605, the electronic device (e.g., the processor 120 or 410) may identify whether the forbidden PLMN lists of the first subscriber identity module 420 and the second subscriber identity module 430 are different.

According to various embodiments, when the forbidden PLMN lists of the first subscriber identity module 420 and the second subscriber identity module 430 are different (e.g., 'Yes' in operation 1605), in operation 1607, the electronic device (e.g., the processor 120 or 410) may update the forbidden PLMN list of the second subscriber identity module 430, based on the forbidden PLMN list of the first subscriber identity module 420. According to an embodiment, the processor 410 (e.g., the second communication protocol stack) may add the forbidden PLMN list of the first subscriber identity module 420 to the forbidden PLMN list of the second subscriber identity module 430.

According to various embodiments, when the forbidden PLMN list corresponding to the location information (e.g., a country) of the electronic device does not exist in the first subscriber identity module 420 (e.g., 'No' in operation 1603), or the forbidden PLMN lists of the first subscriber identity module 420 and the second subscriber identity module 430 are the same (e.g., 'No' in operation 1605), the electronic device (e.g., the processor 120 or 410) may end an embodiment for updating the forbidden PLMN list of the second subscriber identity module.

According to various embodiments, when the forbidden PLMN list of the second subscriber identity module 430 is updated based on the forbidden PLMN list of the first subscriber identity module 420, the electronic device 400 may perform a network search, based on the updated forbidden PLMN list of the second subscriber identity module 430. According to an embodiment, the processor 410 (e.g., the second communication protocol stack) may search for networks other than the network corresponding to PLMN information included in the updated forbidden PLMN list of the second subscriber identity module 430 through the network search.

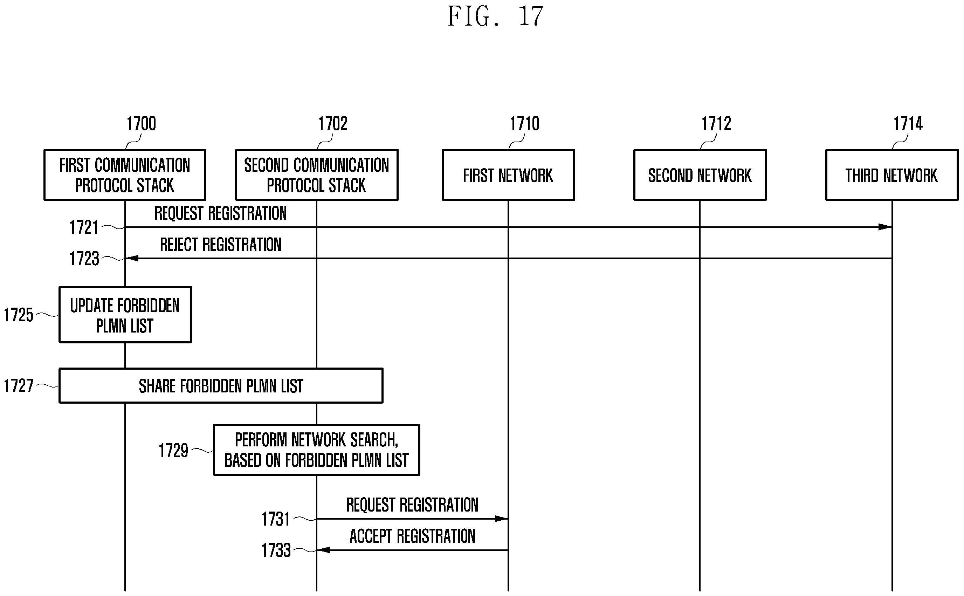

FIG. 17 is an example of performing a network search for a second subscriber identity module by referring to a forbidden PLMN list of a first subscriber identity module in an electronic device according to various embodiments.

According to various embodiments of the disclosure referring to FIG. 17, a first communication protocol stack 1700 corresponding to the first subscriber identity module 420 in the electronic device (e.g., the electronic device 400 of FIG. 4) may transmit a registration request message to a third network 1714 (operation 1721). For example, the registration request message may include first subscriber identity information of the first subscriber identity module 420.

According to various embodiments, when rejecting registration of the electronic device (e.g., the electronic device 400 of FIG. 4) based on the first subscriber identity information, the third network 1714 may transmit a registration reject message to the electronic device (e.g., the electronic device 400 of FIG. 4) (operation 1723). For example, the registration reject message may include a reject cause of the third network 1714.

According to various embodiments, when receiving the registration reject message from the third network 1714, the first communication protocol stack 1700 may identify the reject cause of the third network 1714.

According to various embodiments, when the third network 1714 determines that registration based on the first subscriber identity information is restricted based on the reject cause of the third network 1714, the first communication protocol stack 1700 may update the forbidden PLMN list of the first subscriber identity module 420 based on information related to the third network 1714 (operation 1725). According to an embodiment, when the reject cause of the third network 1714 is "reject cause 11", the first communication protocol stack 1700 may determine that the third network 1714 is a network whose registration is restricted based on the first subscriber identity information. When the third network 1714 is restricted from registration based on the first subscriber identity information, the first communication protocol stack 1700 may add information related to the third network 1714 to the forbidden PLMN list of the first subscriber identity module 420 (operation 1725).

According to various embodiments, the second communication protocol stack 1702 corresponding to the second subscriber identity module 430 in the electronic device (e.g., the electronic device 400 of FIG. 4) may identify whether the forbidden PLMN list of the first subscriber identity module 420 may be used for wireless communication based on the second subscriber identity module 430. According to an embodiment, when the forbidden PLMN list of the first subscriber identity module 420 corresponds to location information (e.g., a country) of the electronic device 101, and the forbidden PLMN list of the first subscriber identity module 420 and the second subscriber identity module 420 are different, the second communication protocol stack 1702 may determine that the forbidden PLMN list of the first subscriber identity module 420 may be used.

According to various embodiments, when it is determined that the forbidden PLMN list of the first subscriber identity module 420 may be used, the second communication protocol stack 1702 may share the forbidden PLMN list of the first subscriber identity module 420 (operation 1727). According to an embodiment, when it is determined that the forbidden PLMN list of the first subscriber identity module 420 may be used, the second communication protocol stack 1702 may add network information included in the forbidden PLMN list of the first subscriber identity module 420 to the forbidden PLMN list of the second subscriber identity module 430.

According to various embodiments, the second communication protocol stack 1702 may perform a network search based on the updated forbidden PLMN list (operation 1729). According to an embodiment, the second communication protocol stack 1702 may limit the search for the network included in the updated forbidden PLMN list of the second subscriber identity module 430 based on the forbidden PLMN list of the first subscriber identity module 420.

According to various embodiments, when the first network 1710 is searched as a result of network search based on the forbidden PLMN list of the second subscriber identity module 430, the second communication protocol stack 1702 may transmit a registration request message to the first network 1710 (operation 1731). For example, the registration request message may include second subscriber identity information of the second subscriber identity module 430.

According to various embodiments, when accepting registration of the electronic device (e.g., the electronic device 400 of FIG. 4) based on the second subscriber identity information, the first network 1710 may transmit a registration acceptance message to the electronic device (e.g., the electronic device 400 of FIG. 4) (operation 1733).

According to various embodiments, when receiving the registration acceptance message from the first network 1710, the second communication protocol stack 1702 may determine that registration to the first network 1710 is completed based on the second subscriber identity information.

According to various embodiments, the second communication protocol stack 1702 may determine whether the forbidden PLMN list of the first subscriber identity module 420 may be used to perform a network search for the second subscriber identity module 430. According to an embodiment, the second communication protocol stack 1702 may determine whether the forbidden PLMN list of the first subscriber identity module 420 may be used regardless of registration refusal of the first subscriber identity module 420 with the third network 1714.

According to various embodiments, an operation method of an electronic device (e.g., the electronic device 101 of FIG. 1, FIG. 2, or FIG. 3 or the electronic device 400 of FIG. 4) including a first subscriber identity module (e.g., the subscriber identity module 196 of FIG. 1 or the first subscriber identity module 420 of FIG. 4) and a second subscriber identity module (e.g., the subscriber identity module 196 of FIG. 1 or the second subscriber identity module 430 of FIG. 4) may include registering to a first network, based on first subscriber identity information and/or first network configuration information of the first subscriber identity module, identifying the first network configuration information, based on the registration to the first network, and performing a network search corresponding to the second subscriber identity module, based on the identified first network configuration information.

According to various embodiments, the first subscriber identity module and the second subscriber identity module may store different subscriber identity information related to a same communication business operator.

According to various embodiments, the first network configuration information may include at least one of public land mobile network (PLMN) information, a first preferred PLMN list, or a first forbidden PLMN list of a network registered based on the first subscriber identity information, and the second network configuration information may include at least one of PLMN information, a second preferred PLMN list, or a second forbidden PLMN list of a network registered based on second subscriber identity information of the second subscriber identity module.

According to various embodiments, identifying PLMN information of the first network when registered in the first network based on the first subscriber identity information and/or the first network configuration information, and updating the first network configuration information, based on the PLMN information of the first network may be further included.

According to various embodiments, the performing a network search corresponding to the second subscriber identity module may include performing a network search corresponding to the second subscriber identity module, based on the PLMN information of the first network when the PLMN information of the first network corresponds to the location information (e.g., a country) of the electronic device based on the updated first network configuration information.

According to various embodiments, the performing a network search corresponding to the second subscriber identity module may include identifying whether the second preferred PLMN list exists in the second subscriber identity module when the first network registered based on the first subscriber identity information and/or the first network configuration information of the first subscriber identity module is included in the first preferred PLMN list, generating the second PLMN list of the second subscriber identity module, based on the first preferred PLMN list when the second preferred PLMN list does not exist in the second subscriber identity module, and performing a network search corresponding to the second subscriber identity module, based on the generated second preferred PLMN list.

According to various embodiments, the performing a network search corresponding to the second subscriber identity module may include updating the second PLMN list of the second subscriber identity module, based on the first preferred PLMN list, when the first network registered based on the first subscriber identity information and/or the first network configuration information of the first subscriber identity module is included in the first preferred PLMN list of the first subscriber identity module, the first network is not included in the second preferred PLMN list of the second subscriber identity module, and the first preferred PLMN list corresponds to the location information of the electronic device, and performing a network search corresponding to the second subscriber identity module, based on the updated second preferred PLMN list.

According to various embodiments, searching for a second network that is a top network included in the second preferred PLMN list of the second subscriber identity information, identifying whether the first network registered based on the first subscriber identity information and/or the first network configuration information of the first subscriber identity module is the top network included in the first preferred PLMN list of the first subscriber identity information when the search for the second network fails, and updating the search period of the second network when the first network is the top network included in the first preferred PLMN list of the first subscriber identity information may be further included.

According to various embodiments, the operation of performing a network search corresponding to the second subscriber identity module may include updating the second forbidden PLMN list of the second subscriber identity module, based on the first forbidden PLMN list of the first subscriber identity module when registered to the first network, and performing a network search corresponding to the second subscriber identity module, based on the updated second forbidden PLMN list.

The embodiments of the disclosure disclosed in the specification and drawings are only presented as specific examples to easily explain the technical content according to the embodiments of the disclosure and help understanding of the embodiments of the disclosure, and are not intended to limit the scope of the embodiments of the disclosure. Therefore, the scope of various embodiments of the disclosure should be construed as including all changes or modified forms derived based on the technical spirit of various embodiments of the disclosure in addition to the embodiments disclosed herein are included in the scope of various embodiments of the disclosure.

## Claims

1. An electronic device comprising:
a first subscriber identity module;
a second subscriber identity module;
a wireless communication circuit; and
a processor operatively connected to the first subscriber identity module, the second subscriber identity module, and the wireless communication circuit;
wherein the processor is configured to:
make a registration to a first network through the wireless communication circuit, based on first subscriber identity information and/or first network configuration information of the first subscriber identity module;
identify the first network configuration information, based on the registration to the first network; and
perform a network search corresponding to the second subscriber identity module, based on the identified first network configuration information.

2. The electronic device of claim 1, wherein the first subscriber identity module and the second subscriber identity module comprise different subscriber identity information related to a same communication business operator.

3. The electronic device of claim 1, wherein the first network configuration information comprises information related to at least one of public land mobile network (PLMN) information, a first preferred PLMN list, or a first forbidden PLMN list of a network registered based on the first subscriber identity information, and
wherein the second network configuration information comprises information related to at least one of PLMN information, a second preferred PLMN list, or a second forbidden PLMN list of a network registered based on second subscriber identity information of the second subscriber identity module different from the first subscriber identity information.

4. The electronic device of claim 3, wherein the processor is configured to:
identify the PLMN information of the first network in case that the electronic device is registered in the first network based on the first subscriber identity information and/or the first network configuration information; and
update the first network configuration information, based on the PLMN information of the first network.

5. The electronic device of claim 4, wherein the processor is configured to perform a network search corresponding to the second subscriber identity module, based on the PLMN information of the first network in case that it is determined that the PLMN information of the first network corresponds to the location information of the electronic device based on the updated first network configuration information.

6. The electronic device of claim 3, wherein the processor is configured to:
identify whether the second preferred PLMN list exists in the second subscriber identity module in case that the first network registered based on the first subscriber identity information and/or the first network configuration information of the first subscriber identity module is included in the first preferred PLMN list of the first network configuration information;
generate the second PLMN list of the second subscriber identity module, based on the first preferred PLMN list in case that the second preferred PLMN list does not exist in the second subscriber identity module; and
perform a network search corresponding to the second subscriber identity module, based on the generated second preferred PLMN list.

7. The electronic device of claim 3, wherein the processor is configured to:
update the second PLMN list of the second subscriber identity module, based on the first preferred PLMN list, in case that the first network registered based on the first subscriber identity information and/or the first network configuration information of the first subscriber identity module is included in the first preferred PLMN list of the first subscriber identity module, the first network is not included in the second preferred PLMN list of the second subscriber identity module, and the first preferred PLMN list corresponds to the location information of the electronic device; and
perform a network search corresponding to the second subscriber identity module, based on the updated second preferred PLMN list.

8. The electronic device of claim 3, wherein the processor is configured to:
perform a search for a second network that is a top network included in the second preferred PLMN list of the second subscriber identity information;
identify whether the first network registered based on the first subscriber identity information and/or the first network configuration information of the first subscriber identity module is the top network included in the first preferred PLMN list of the first subscriber identity information, in case that the search for the second network fails; and
update the search period of the second network, in case that the first network is the top network included in the first preferred PLMN list of the first subscriber identity information.

9. An operation method of an electronic device comprising a first subscriber identity module and a second subscriber identity module, the method comprising:
registering to a first network, based on first subscriber identity information and/or first network configuration information of the first subscriber identity module;
identifying the first network configuration information, based on the registration to the first network; and
performing a network search corresponding to the second subscriber identity module, based on the identified first network configuration information.

10. The method of claim 9, wherein the first subscriber identity module and the second subscriber identity module comprise different subscriber identity information related to a same communication business operator.

11. The method of claim 9, wherein the first network configuration information comprises information related to at least one of public land mobile network (PLMN) information, a first preferred PLMN list, or a first forbidden PLMN list of a network registered based on the first subscriber identity information, and
wherein the second network configuration information comprises information related to at least one of PLMN information, a second preferred PLMN list, or a second forbidden PLMN list of a network registered based on second subscriber identity information of the second subscriber identity module.

12. The method of claim 11, wherein the identifying of the first network configuration information comprises:
identifying the PLMN information of the first network in case that the electronic device is registered in the first network based on the first subscriber identity information and/or the first network configuration information; and
updating the first network configuration information, based on the PLMN information of the first network.

13. The method of claim 12, wherein the performing of a network search corresponding to the second subscriber identity module comprises performing a network search corresponding to the second subscriber identity module, based on the PLMN information of the first network in case that it is determined that the PLMN information of the first network corresponds to the location information (e.g., a country) of the electronic device based on the updated first network configuration information.

14. The method of claim 11, wherein the performing of a network search corresponding to the second subscriber identity module comprises:
identifying whether the second preferred PLMN list exists in the second subscriber identity module in case that the first network registered based on the first subscriber identity information and/or the first network configuration information of the first subscriber identity module is included in the first preferred PLMN list;
generating the second PLMN list of the second subscriber identity module, based on the first preferred PLMN list in case that the second preferred PLMN list does not exist in the second subscriber identity module; and
performing a network search corresponding to the second subscriber identity module, based on the generated second preferred PLMN list.

15. The method of claim 11, wherein the performing of a network search corresponding to the second subscriber identity module comprises:
updating the second PLMN list of the second subscriber identity module, based on the first preferred PLMN list, in case that the first network registered based on the first subscriber identity information and/or the first network configuration information of the first subscriber identity module is included in the first preferred PLMN list of the first subscriber identity module, the first network is not included in the second preferred PLMN list of the second subscriber identity module, and the first preferred PLMN list corresponds to the location information of the electronic device; and
performing a network search corresponding to the second subscriber identity module, based on the updated second preferred PLMN list.
